# EUROPEAN PATENT APPLICATION

(11) **EP 1 987 878 A1**
(43) Date of publication of application: **05.11.2008**
(21) Application number: 07714703.1
(22) Date of filing: 21.02.2007
(51) Int. Cl.: B01J 23/745, B01J 23/825, B01J 23/835, B01J 37/12, B01J 37/14, B01J 37/16, B82B 3/00, C01B 31/02

(54) **CATALYST FOR CARBON NANOSTRUCTURE GROWTH, PROCESS FOR PRODUCING CARBON NANOSTRUCTURE, RAW-MATERIAL GAS AND CARRIER GAS FOR PRODUCING THE SAME, AND APPARATUS FOR PRODUCING THE SAME**

(30) Priority: 24.02.2006 JP 2006047961
(71) Applicant: Taiyo Nippon Sanso Corporation, 1-3-26, Koyama, Shinagawa-ku Tokyo, 1428558 (JP)
(72) Inventor: NAKAYAMA, Yoshikazu, Osaka 573-0084 (JP); NAGASAKA, Takeshi, Tokyo 142-8558 (JP); SAKAI, Toru, Tokyo 142-8558 (JP); SUEKANE, Osamu, Sakai-city, Osaka 599-8116 (JP)
(74) Representative: Schickedanz, Willi
(86) International application number: PCT/JP2007/053203
(87) International publication number: WO 2007/097367

(57) **Abstract**

It is the purpose of this invention to present a process for producing carbon nanostructure in which the mechanism of continuous carbon nanostructure growth can be optimized and a high-quality carbon nanostructure can be produced, a catalyst for carbon nanostructure growth which is for use in the production, a raw-material gas and a carrier gas for producing the same, and an apparatus for producing the same. The process for carbon nanostructure production, in which the length of the nanostructure can be continuously controlled comprises feeding a carrier gas and a raw-material gas to a reaction chamber (4) to produce a carbon nanostructure (2) with a catalytic structure (6), wherein the concentrations of oxidation gases contained in the carrier gas and raw-material gas, such as oxygen and water (in the case of raw-material acetylene gas, minor ingredients such as DMF and acetone, which are solvents), are regulated to a moderate value. Thus, a carbon nanostructure of good quality can be produced at a high efficiency.

## Description

### FIELD OF THE INVENTION

The present invention relates to a catalyst for carbon nanostructure growth such as carbon nanotube and carbon nanocoil, a process for producing the carbon nanostructure, a raw-material gas, a carrier gas and their mixed gas, and an apparatus for producing the carbon nanostructure. Especially, when the raw-material gas is supplied in a reaction chamber and the carbon nanostructure grows by the catalyst disposed in the reaction chamber, the present invention relates to the process for synthesizing the carbon nanostructure continuously growing at a high efficiency, the gases used for producing the same, and the apparatus for producing the same.

### BACKGROUND ART

Carbon nanostructure of the present invention is a material of nanosize composed of carbon atoms such as carbon nanotube, carbon nanotube with beads that the beads are formed on carbon nanotube, carbon nanobrush that many carbon nanotubes bristle, carbon nanotwist that nanotube having distortion and carbon nanocoil.
In the following, these many carbon materials are generally called the carbon nanostructure.

As the process for producing these carbon nanostructures, there are known a chemical vapor deposition method (CVD method) that an objective material grows by decomposing raw-material gas such as hydrocarbon, and a catalyst chemical vapor deposition method (CCVD method) that the objective material grows by using of catalysat.
This CCVD method is only one variation of CVD method.

The present invention is related to a method to produce carbon nanostructure by use of CVD method. This CVD method is general name of the method that the objective material grows by decomposing the raw-material in the reaction chamber, and the decomposing means includes various decomposing means such as heat, electron beam, laser beam and ion beam.

In order to produce carbon nanostructure, there is conventionally adopted the production process, wherein a mixed gas of raw-material gas and carrier gas is introduced into the reaction chamber, the raw-material is decomposed by catalyst, and the carbon nanostructure grows on the surface of catalyst.

As one of producing apparatus using this kind of production method, there is an apparatus for synthesizing carbon nanostructure of raw-material blowing type.
For example, as shown in patent document 1, this apparatus for synthesizing carbon nanostructure is configured so as to supply the raw-material with carrier gas in the reaction chamber disposed the catalytic structure and to make the carbon nanostructure grow on the surface of the catalytic structure. A nozzle tip of raw-material gas nozzle introducing the raw-material gas in the reaction chamber is arranged near the surface of catalytic structure, the preheated carbon raw-material gas is instantly and concentratedly blown on the catalyst surface, so that the contact probability between the raw-material gas and the catalyst surface is rapidly raised up, and the carbon nanostructure can be produced at high efficiency.

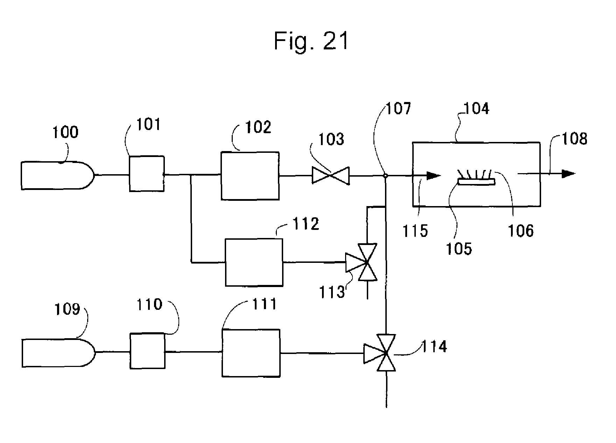

In non-patent document 2, the growth of carbon nanostructure was realized with high efficiency by supplying instantly the raw-material gas of quantity needed without initial fluctuation, but it already becomes clear by the study of the present inventors that the growth time of carbon nanostructure gives a decisive bad influence to the extremely short time synthesis. Furthermore, the growth mechanism of carbon nanostructure is composed of the first step at which the carbon nanostructure grows rapidly in the early stage and the second step at which it grows slowly and continuously. This situation is described.
In the apparatus for synthesizing carbon nanostructure of raw-material blowing type, FIG. 21 is an outlined schematic diagram of the apparatus for synthesizing carbon nanostructure in which the initial fluctuation time and the rise time are eliminated at the supply time of raw-material gas.
After the carrier gas of He etc emitted from carrier gas container 100 was depressurized by regulator 101, it is adjusted to be a predetermined flow by carrier gas flow controller 102 such as mass flow controller and is supplied in the necessary timing by adjusting of carrier gas valve 103.

On the other hand, after the raw-material gas of C2H2 etc emitted from raw-material gas container 109 was depressurized by regulator 110, it is adjusted to be a predetermined flow by oxygen flow controller 111 such as mass flow controller and is supplied in the necessary timing by adjusting of raw-material gas valve 114.

Carrier gas and raw-material gas are mixed in confluence portion 107, and is spouted out from gas supply nozzle 115 into reaction chamber 104. Raw-material gas reacts with catalyst structure 105, so that the carbon nanostructure 106 is synthesized on the surface of catalyst structure 105 and unnecessary gas is ejected from gas exhaust pipe 108 to the outside. Raw-material gas is beforehand mixed with carrier gas emitted through another supply passage from carrier gas container 100 on the way to the confluence portion 107. This mixed quantity is adjusted with carrier gas flow controller 112 and carrier gas valve 113.

According to the apparatus for synthesizing carbon nanostructure shown in FIG. 21, high efficient growth of carbon nanostructure 106 can be realized by supplying instantly the raw-material gas of quantity needed without initial fluctuation. In addition, the present invention includes various kinds of subject on preferable catalyst for producing the high quality carbon nanostructure as described later, but the physical property fluctuations of catalyst in growth process of carbon nanostructure are disclosed in the non-patent document 1 written by a part of the present inventors.
[Patent document 1] Japanese Patent Laid-Open No. 2004-182573
[Non-patent document 1] Kenji Nishimura, Nobuharu Okazaki, Lujin Pan, and Yoshikazu Nakayama, Japanese Journal of Applied Physics, Vol. 43, No.4A, 2004, pp.L471 - L474.
[Non-patent document 2] Osamu Suekane, Takeshi Nagasaka, Toshinori Nosaka and Yoshikazu Nakayama, Oyo Butsuri, Vol. 73, No.5, 2004, pp.615-619

### DISCLOSURE OF THE INVENTION

### PROBLEM TO BE SOLVED BY THE INVENTION

However, even in said apparatus for synthesizing carbon nanostructure, the yield was low because of poor reproducibility in length of carbon nanostructure, and there was the case that the carbon nanostructure suddenly stops to grow, so that the growth of carbon nanostructure stopped within the size of some extent. In other words, there was a problem that it is difficult to control freely the length of carbon nanostructure.

Therefore, the present inventors disintegrated the growth mechanism of carbon nanostructure to three growth processes of the condition of catalyst of the immediately before that carbon nanostructure grows, the first growth mechanism that the carbon nanostructure rapidly grows in the early stage and the second growth mechanism that it grows slowly and continuously, so that by clarifying the growth conditions in each process, they investigated the possibility to control high efficient growth while controlling the length of carbon nanostructure.

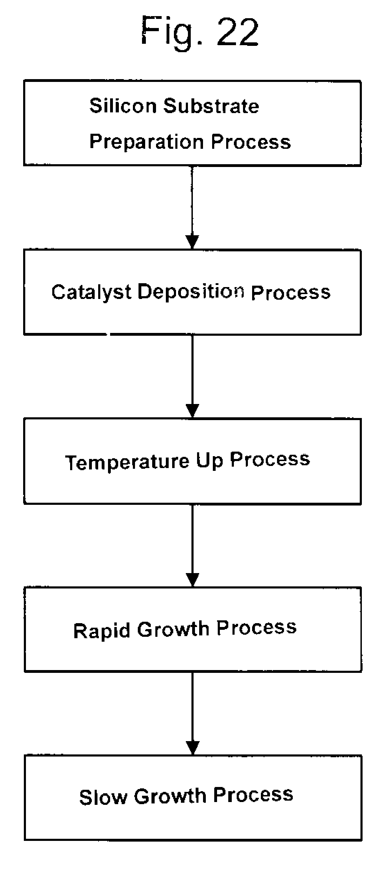

When CVD growth process of carbon nanostructure is disintegrated, as shown in FIG. 22, they can be arranged to preparation process of silicon substrate, catalyst film formation process on the substrate, temperature rise process of catalyst (atomization and oxidation of catalyst particles), rapid growth process (first growth mechanism) and slowly continuous growth process (second growth mechanism).

In the growth process of carbon nanostructure, it becomes clear that there exist catalyst fine particles in the first layer of carbon nanostructure. In atomization and oxidation process of catalyst in the temperature rise process, the catalyst fine particle forms granular oxide, and while forming carbide in contact with raw-material gas, carbon nanostructure is formed on the surface, wherein the graphite layer is formed in the early stage. Since the interaction between graphite layer and oxide crystal of the catalyst surface is comparatively gentle, it becomes clear that this graphite layer diffuses into the catalyst surface, so that the carbon nanostructure grows.
In that stage, the diameter of catalyst fine particle becomes too larger than requirement in the temperature rise process, and it is oxidized too much larger than requirement, so that it becomes difficult to form the carbon nanostructure of good quality.

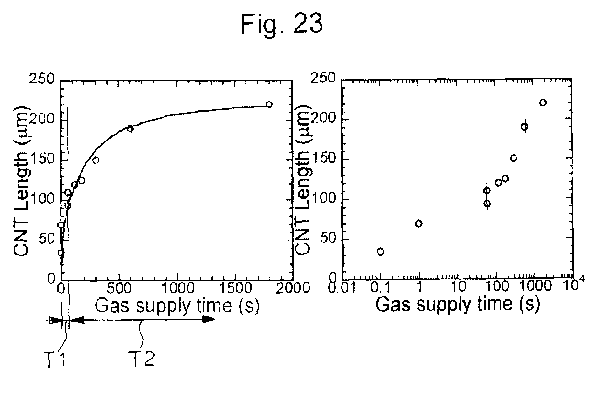

FIG.23 is the measurement example on the rapid growth and slow growth (raw-material gas: acetylene of the concentration 6%), which is measured by the present inventors using said apparatus for synthesizing carbon nanostructure, and shows the relation between the reaction time after addition of the raw-material gas and growth length of carbon nanostructure (CNT: carbon nanotube). From this measurement example, it is found that the length of CNT grows rapidly in the period T1 of 60 seconds from reaction start, and the growth rate with respect to the reaction time becomes slow in the period T2 after said 60 seconds.

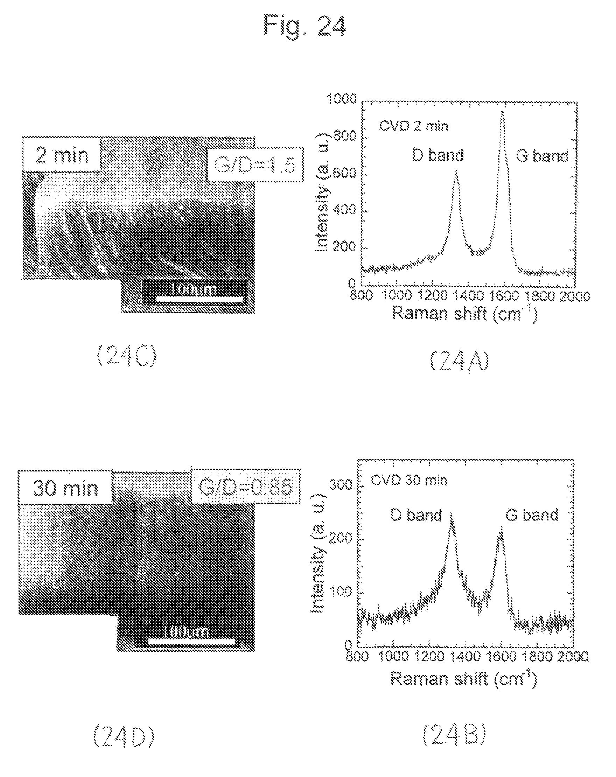

(24A) and (24B) of FIG. 24 show Raman spectrum of CVD reaction times of 2min and 30min, respectively. (24C) and (24D) of FIG. 24 show SEM photographs (scanning electron microscope) of CVD reaction times of 2min and 30min, respectively. From comparison of these diagrams, G-band spectrum is larger in CNT after 2min much because the ratio of G-band to D-band is 1.5. On the other hand, in CNT after 30 min, the ratio becomes 0.85 because the spectrum of D-band increased, so that it is found that the ratio of amorphous-shaped carbon is large. This originates from that carbon nanostructure lacking in reaction and carbon accumulate on the catalyst, because supply rate of raw-material is larger than diffusion rate in the stage transferring to the slow growth rate.

Since the raw-material gas in contact with oxide catalyst generated under suitable condition reduces the catalyst instantly, the reaction to generate carbide becomes mainly, and the graphite layer is formed around the catalyst particle in a short time, so that carbon nanostructure rapidly grows as far as the activity which catalyst holds can be continued.
However, when the rapid growth of first stage slows down, unnecessary carbon accumulates on the catalyst surface so as to disturb the contact between raw-material gas and active catalyst surface, so that it becomes the rate-determining step of diffusion of carbon on the catalyst surface, and then it is clear that the slow growth appears and the growth is finished.
Therefore, in the processes from the temperature rise process of catalyst to the slow continuous growth process, by controlling the concentration of minor constituent (for example, oxygen, water, DMF(dimethylformamide), acetone) in atmospheric gas (carrier gas) and raw-material gas, the present invention can optimize the continuous growth mechanism of carbon nanostructure, and can provide the process for producing carbon nanostructure by which can manufacture the carbon nanostructure of good quality, the catalyst for carbon nanostructure growth, the raw-material gas and carrier gas for producing the same, and the apparatus for producing the same.

### MEANS TO SOLVE THE PROBLEM

In order to solve the above problems, there was achieved the present invention which has the first to 39th forms.

At first, the process to reach completion of the present invention is explained in detail. In non-patent document 1, it is shown that iron catalyst in helium gas atmosphere causes the phase transition from iron element state to iron oxide state such as hematite (Fe2O3) through magnetite state (Fe3O4) in the process from room temperature to growth temperature (700°C) of carbon nanostructure. On the basis of this prior art information, the present inventors have deeply investigated the physical properties of preferable iron catalyst used for the process for producing carbon nanostructure by supplying carrier gas and raw-material gas to reaction chamber, so that in the process heating the catalyst to the reaction temperature while supplying the carrier gas, there was found the phenomenon that fluidization temperature of catalyst particle is high when the catalyst is strongly oxidized and then atomization at a predetermined temperature does not occur.

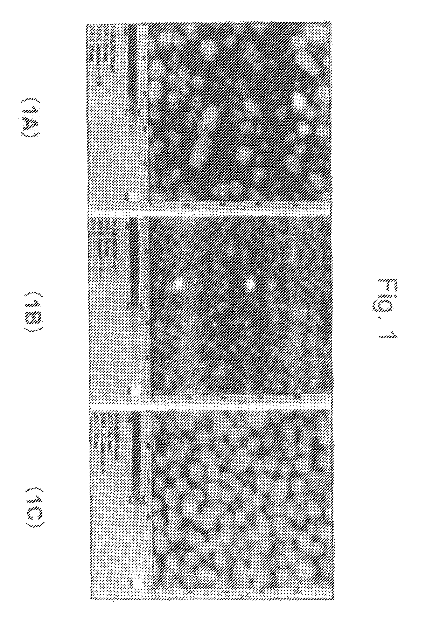

(1A)∼(1C) of FIG. 1 show the AFM images (atomic force microscope image) of catalyst composed of iron element, magnetite obtained by heat oxidation of the catalyst and hematite obtained by further heat oxidation, respectively. It is understood that the particle diameter of magnetite of (1 B) is smaller than the particle diameter of hematite of (1C). Therefore, when there are included many components promoting catalyst oxidation such as oxygen and water in the atmospheric gas, enlargement of particle size occurs because oxidation advances to excess in a atomizing process, and the probability that carbon nanostructure generates falls.

In addition, according to growth experiment of carbon nanostructure by using of metallic state catalyst unoxidized, it is found the phenomenon that the probability generating carbon nanostructure falls. This can be considered as follows: in unoxidized metallic state, since a size of catalyst particle to become nucleus for forming carbon nanostructure is several tens nm so that the particle is extremely minute and instable, the catalyst fluidizes and coheres in the temperature lower than 700°C of reaction temperature, the particle size becomes large in the atomization process.

According to the growth experiment of carbon nanostructure by using of catalyst received annealing of a time long enough with a predetermined temperature, there is seen the phenomenon that carbon nanostructure does not occur. It is considered in the temperature rise time that the primary crystalline particles of catalyst cause cohesion by its temperature rise and the formation probability of carbon nanostructure extremely lowers in the case that the diameter of secondary crystalline particle of catalyst becomes larger than several tens to several hundreds nm.

From above-mentioned experiments and discussion, there was obtained the results that catalyst metal not oxidized strongly at the initial stage is atomized at a predetermined temperature while being moderately oxidized by existence of oxygen or water being minor constituent contained in the atmospheric gas, so that above atomization becomes a control element of high efficient formation of high quality carbon nanostructure.

In addition, even if said atomization process forms the moderate particle diameter, the fall of generation probability of carbon nanostructure occurs when there are the fluctuation in supply process of raw-material gas and the slow raise of raw-material gas concentration. This is nothing but that said fluctuation receives largely an effect from temperature and pressure because carbon nanostructure is crystal growth. In addition, in the initial slow raise, if the necessary and sufficient quantity of carbon source gas for catalyst is short at the rapid growth time of the primary stage, it is seen the phenomenon that the carbon nanostructure does not grow to sufficient length. Therefore, in order to stabilize the high efficient formation of carbon nanostructure controlled by the present invention, it is preferable that the supply form of raw-material and the means contacting the raw-material gas with catalyst are used.

Next, it was inspected if catalyst oxidation is effective in growth process of carbon nanostructure. As described above, after catalyst was atomized while receiving moderate oxidation, the fluctuation and the slow raise of raw-material gas concentration are eliminated in the supply process of raw-material gas, so that the rapid growth of carbon nanostructure in first growth step is achieved by contact between sufficient raw-material gas and catalyst. That is to say, in normal situation, since the contact with raw-material gas is disturbed by accumulation of carbon on the surface of catalyst particle, it shifts to the slow second growth step by surface diffusion rate-determining of carbon. When it shifted to the second growth step, a moderate concentration of oxygen, water, acetone and DMF etc with oxidation function of carbon in the raw-material gas exists around carbon accumulating on the catalyst surface, so that carbon accumulating on the catalyst surface is oxidized to generate and diffuse carbon dioxide gas, thus the contact between catalyst surface and raw-material gas is achieved. Therefore, in the high efficient formation of carbon nanostructure growing continuously, there was obtained a conclusion that it becomes an important control element to oxidize carbon accumulating on the catalyst surface.

The present invention is done on the basis of the above-described results, and the first form of the present invention is a catalyst comprising magnetite at least, in said catalyst disposed in a reaction chamber to which a raw-material gas is supplied and which grows a carbon nanostructure while flowing said raw-material gas in said reaction chamber.

The second form of the present invention is the catalyst of said first form, wherein said magnetite is used as a starting catalyst which grows said carbon nanostructure in said reaction chamber.

The third form of the present invention is a process for producing carbon nanostructure comprising the steps of: disposing beforehand said catalyst comprised of iron element in said reaction chamber, and setting a magnetite conversion process in which said catalyst is converted to magnetite by supplying an oxidation gas in said reaction chamber with said carrier gas before supplying and flowing said raw-material gas in said reaction chamber, in a process for producing carbon nanostructure in which a carrier gas and a raw-material gas are supplied in a reaction chamber and said carbon nanostructure grows by a catalyst disposed in said reaction chamber while flowing said raw-material gas in said reaction chamber.

The fourth form of the present invention is the process for producing carbon nanostructure of the third form, said process further comprising a catalyst initialization process in which a reduction gas is supplied in said reaction chamber before said magnetite conversion process, so that an iron oxide component of said catalyst disposed in said reaction chamber is reduced.

The fifth form of the present invention is the process for producing carbon nanostructure of the third or fourth form, said process comprising a carbon nanostructure growth process in which said oxidation gas is supplied in said reaction chamber with said raw-material gas and said carrier gas after said magnetite conversion process.

The sixth form of the present invention is the process for producing carbon nanostructure of the third, fourth or fifth form, wherein said oxidation gas is comprised of one or more substances selected from a group of water, oxygen, acetone, alcohol, DMF (dimethylformamide), CO2, CO, 03 and H2O2.

The seventh form of the present invention is a raw-material gas for producing carbon nanostructure comprising said raw-material gas mixed with an oxidation gas beforehand.

The eighth form of the present invention is the raw-material gas for producing carbon nanostructure of the seventh form, wherein said oxidation gas is water mixed with a range of 0.05ppm - 3%.

The ninth form of the present invention is the raw-material gas for producing carbon nanostructure of the seventh form, wherein said oxidation gas is oxygen mixed with a range of 0.01 ppb - 1 %.

The tenth form of the present invention is the raw-material gas for producing carbon nanostructure of the seventh form, wherein said oxidation gas is CO2 mixed with a range of 0.01 ppm - 5%.

The eleventh form of the present invention is the raw-material gas for producing carbon nanostructure of the seventh form, wherein said oxidation gas is CO mixed with a range of 0.01 ppm - 5%.

The twelfth form of the present invention is the raw-material gas for producing carbon nanostructure of the seventh form, wherein said oxidation gas is 03 mixed with a range of 0.01 ppb - 1 %.

The 13th form of the present invention is the raw-material gas for producing carbon nanostructure of the seventh form, wherein said oxidation gas is H2O2 mixed with a range of 0.1 ppb - 1 %.

The 14th form of the present invention is the raw-material gas for producing carbon nanostructure of the seventh form, wherein said oxidation gas is acetone mixed with a range of 1 ppm - 10%.

The 15th form of the present invention is the raw-material gas for producing carbon nanostructure of the seventh form, wherein said oxidation gas is alcohol mixed with a range of 1 ppm - 10%.

The 16th form of the present invention is the raw-material gas for producing carbon nanostructure of the seventh form, wherein said oxidation gas is DMF mixed with a range of 0.01 % - 0.5%.

The 17th form of the present invention is the raw-material gas for producing carbon nanostructure of any of the forms 7 to 16, wherein a reduction gas is mixed with a range of less than or equal to 1 ppm.

The 18th form of the present invention is a carrier gas for producing carbon nanostructure comprising said carrier gas mixed with an oxidation gas beforehand.

The 19th form of the present invention is the carrier gas for producing carbon nanostructure of the 18th form, wherein said oxidation gas is water mixed with a range of 0.05ppm- 3%.

The 20th form of the present invention is the carrier gas for producing carbon nanostructure of the 18th form, wherein said oxidation gas is oxygen mixed with a range of 0.01 ppb - 1%.

The 21 st form of the present invention is a mixture gas for producing carbon nanostructure comprising said mixture gas in which a raw-material gas, a carrier gas and an oxidation gas for producing carbon nanostructure are mixed beforehand.

The 22nd form of the present invention is the mixture gas for producing carbon nanostructure of the 21 st form, wherein said oxidation gas is water mixed with a range of 0.05ppm - 3%.

The 23rd form of the present invention is the mixture gas for producing carbon nanostructure of the 21 st form, wherein said oxidation gas is oxygen mixed with a range of 0.01 ppb -1%.

The 24th form of the present invention is the mixture gas for producing carbon nanostructure of the 21 st, 22nd or 23rd form, wherein said mixture gas further comprises a reduction gas with a range of less than or equal to 1 ppm.

The 25th form of the present invention is a process for producing carbon nanostructure comprising the steps of: disposing beforehand said catalyst comprised of iron element in said reaction chamber, and supplying said raw-material gas in said reaction chamber with an oxidation gas excluding water, in a process for producing carbon nanostructure in which a raw-material gas is supplied in a reaction chamber and said carbon nanostructure grows by a catalyst disposed in said reaction chamber while flowing said raw-material gas in said reaction chamber.

The 26th form of the present invention is the process for producing carbon nanostructure of the 25th form, wherein said oxidation gas is comprised of one or more substances selected from a group of oxygen, acetone, alcohol, DMF (dimethylformamide), CO2, CO, 03 and H2O2.

The 27th form of the present invention is a process for producing carbon nanostructure comprising the steps of: disposing beforehand said catalyst comprised of iron element in said reaction chamber, supplying said raw-material gas in said reaction chamber with an oxidation gas, and controlling variably said raw-material gas concentration in a growth process of said carbon nanostructure by adjusting a supply concentration of said raw-material gas, in a process for producing carbon nanostructure in which a raw-material gas is supplied in a reaction chamber and said carbon nanostructure grows by a catalyst disposed in said reaction chamber while flowing said raw-material gas in said reaction chamber.

The 28th form of the present invention is the process for producing carbon nanostructure of the 27th form, wherein a ratio of oxygen contained in said oxidation gas to said raw-material gas is variably controlled in said growth process of said carbon nanostructure.

The 29th form of the present invention is the process for producing carbon nanostructure of the 27th form, wherein said ratio is variably controlled by adjusting said supply concentration of said oxidation gas.

The 30th form of the present invention is the process for producing carbon nanostructure of the 27th, 28th or 29th form, wherein said oxidation gas is comprised of one or more substances selected from a group of water, oxygen, acetone, alcohol, DMF (dimethylformamide), CO2, CO, O3 and H2O2.

The 31 st form of the present invention is an apparatus for producing carbon nanostructure comprising a raw-material gas supply means and a catalyst comprised of iron element disposed beforehand in a reaction chamber so as that said raw-material gas is supplied in said reaction chamber by said raw-material gas supply means and said carbon nanostructure grows by said catalyst while flowing said raw-material gas in said reaction chamber, a carrier gas supply means supplying a carrier gas in said reaction chamber, and an oxidation gas supply means supplying an oxidation gas in said reaction chamber, wherein before supplying and flowing said raw-material gas in said reaction chamber, said oxidation gas is supplied in said reaction chamber with said carrier gas by said carrier gas supply means and said oxidation gas supply means, so that said catalyst is converted to magnetite.

The 32nd form of the present invention is the apparatus for producing carbon nanostructure of the 31 st form, wherein said raw-material gas and said oxidation gas are flown for said magnetite in said reaction chamber.

The 33rd form of the present invention is the apparatus for producing carbon nanostructure of the 31 st or 32nd form, wherein said oxidation gas is comprised of one or more substances selected from a group of water, oxygen, acetone, alcohol, DMF (dimethylformamide), CO2, CO, O3 and H2O2.

The 34th form of the present invention is the apparatus for producing carbon nanostructure of the 31 st, 32nd or 33rd form, said apparatus further comprising a reduction gas supply means supplying a reduction gas in said reaction chamber, wherein a reduction gas is supplied in said reaction chamber from said reduction gas supply means before said magnetite conversion of said catalyst, so that an iron oxide component of said catalyst disposed in said reaction chamber is reduced.

The 35th form of the present invention is an apparatus for producing carbon nanostructure comprising a raw-material gas supply means supplying a raw-material gas in a reaction chamber, a catalyst comprised of iron element disposed beforehand in said reaction chamber and an oxidation gas supply means supplying an oxidation gas except water in said reaction chamber, so that said raw-material gas is supplied in said reaction chamber by said raw-material gas supply means, said oxidation gas is supplied in said reaction chamber by said oxidation gas supply means and said carbon nanostructure grows by said catalyst while flowing said raw-material gas and said oxidation gas in said reaction chamber.

The 36th form of the present invention is an apparatus for producing carbon nanostructure comprising a raw-material gas supply means supplying a raw-material gas in a reaction chamber, a catalyst comprised of iron element, an oxidation gas supply means supplying an oxidation gas in said reaction chamber and an oxygen ratio control means controlling variably an ratio of oxygen contained in said oxidation gas supplied in said reaction chamber by said oxidation gas supply means to said raw-material gas supplied in said reaction chamber by said raw-material gas supply means, so that said raw-material gas is supplied in said reaction chamber by said raw-material gas supply means, said oxidation gas is supplied in said reaction chamber by said oxidation gas supply means and said carbon nanostructure grows by said catalyst while flowing said raw-material gas and said oxidation gas in said reaction chamber, and a concentration of said raw-material gas is variably controlled in said growth process of carbon nanostructure by adjusting a supply concentration of said raw-material gas.

The 37th form of the present invention is the apparatus for producing carbon nanostructure of the 36th form, wherein said oxygen ratio in said oxidation gas to said raw-material gas is variably controlled in said growth process of carbon nanostructure.

The 38th form of the present invention is the apparatus for producing carbon nanostructure of the 36th form, wherein said oxygen ratio control means controls variably said ratio by adjusting said supply concentration of said oxidation gas.

The 39th form of the present invention is the apparatus for producing carbon nanostructure of the 29th, 30th or 31 st form, wherein said oxidation gas is comprised of one or more substances selected from a group of water, oxygen, acetone, alcohol, DMF (dimethylformamide), CO2, CO, O3 and H2O2.

### EFFECT OF THE INVENTION

According to the catalyst for carbon nanostructure growth concerning the first form of the present invention, since the catalyst has a magnetite at least, it is possible to grow the high quality carbon nanostructure based upon iron oxidation and fine particulate of said magnetite.

According to the catalyst for carbon nanostructure growth concerning the second form of the present invention, since said magnetite is used as the starting catalyst grows said carbon nanostructure in said reaction chamber, it becomes possible to grow continuously the high quality carbon nanostructure in rapid growth process.

According to the third form of the present invention, as said catalyst comprised of iron element is disposed beforehand in said reaction chamber and said oxidation gas is supplied in said reaction chamber with said carrier gas before supplying and flowing said raw-material gas in said reaction chamber so that said magnetite conversion process in which said catalyst is converted to magnetite is set, it becomes possible to grow continuously the high quality carbon nanostructure by the catalyst converted to magnetite.
The oxidation gas in the present form and the below-described forms is the general name of gas showing the oxidizing action which bonds oxygen atom to iron atom being the catalyst, and contains not only an oxygen inclusion gas giving oxygen atom directly to iron atom by containing oxygen atom in the molecule but also a gas giving oxygen atom indirectly to catalyst iron by pulling oxygen atom out from another substance, so that it contains all oxidation gas oxidizing the catalyst iron finally.

According to the fourth form of the present invention, as there is provided the catalyst initialization process in which the reduction gas is supplied in said reaction chamber before said magnetite conversion process so that the iron oxide component of said catalyst disposed in said reaction chamber is reduced, it becomes possible to initialize the catalyst received natural oxidation by said reduction gas before magnetite conversion and to control stably the degree of oxidation of catalyst, so that it can be realized to eliminate the dispersion of growth of carbon nanostructure and improve the quality of growing carbon nanostructure.

According to the fifth form of the present invention, since there is provided the carbon nanostructure growth process in which the oxidation gas is supplied in said reaction chamber with said raw-material gas and said carrier gas after said magnetite conversion process, even if surplus carbon component from the raw-material gas is supplied in the slow continuous growth process, the catalyst oxidation and atomization are promoted by supply of said oxidation gas so that its catalytic action does not fall and it becomes possible to grow continuously the high quality carbon nanostructure.

According to the sixth form of the present invention, in said third to fifth forms, by using of said oxidation gas comprised of one or more substances selected from a group of water, oxygen, acetone, alcohol, DMF (dimethylformamide), CO2, CO, 03 and H2O2, it is possible to perform the oxidation treatment of catalyst with low price and to produce cheaply the high quality carbon nanostructure. In addition, the oxidation gas containing oxygen in molecular formula can be used as said oxidation gas of the present invention and the oxidation gas except said oxidation gas enumerated in this form may be used.

According to raw-material gas for producing carbon nanostructure concerning the seventh form of the present invention, since the oxidation gas is mixed beforehand, the supply mechanism supplying the oxidation gas in said reaction chamber independent of the raw-material gas is not necessary, thus it is possible to perform the supply of oxidation gas together with the raw-material gas and to perform easily and cheaply the growth control of high quality carbon nanostructure.

According to any form of the eighth to 16th forms, there can be used the raw-material gas for producing carbon nanostructure containing said oxidation gas such as water mixed in the range of 0.05ppm to 3%, oxygen mixed in the range of 0.01 ppb to 1 %, CO2 mixed in the range of 0.1 ppm to 5%, CO mixed in the range of 0.1 ppm to 5%, 03 mixed in the range of 0.1 ppb to 1 %, H2O2 mixed in the range of 0.1 ppb to 1 %, acetone mixed in the range of 1 ppm to 10%, alcohol mixed in the range of 1 ppm to 10% and DMF mixed in the range of 0.01 % to 0.5%, so that it is possible to control easily and cheaply the growth of high quality carbon nanostructure. In addition, the mixture ratio of oxidation gas in the present invention is the mixture volume ratio to raw-material gas and/or carrier gas supplied in the reaction chamber, and the gas mixture ratio in the forms of following invention is also like this. The mixture concentration of oxygen, CO2, CO, 03, H2O2, acetone, ethyl alcohol or DMF etc in the raw-material gas is rightly adjusted to the necessary and sufficient quantity to oxidize carbon accumulating on the catalyst on the basis of the concentration of carbon source gas to coincide with the growth rate of carbon nanostructure.

According to raw-material gas for producing carbon nanostructure concerning the 17th form of the present invention, in said the eighth to 16th forms, since the reduction component of less than or equal to 1 ppm is included, it is possible to suppress the surplus oxidation of catalyst in the growth process of carbon nanostructure and to perform growth control more precisely.

According to carrier gas for producing carbon nanostructure concerning the 18th form of the present invention, since the oxidation gas is mixed beforehand, the supply mechanism supplying the oxidation gas in said reaction chamber independent of the raw-material gas is not necessary, thus it is possible to perform the supply of oxidation gas at supply time of carrier gas and to perform easily and cheaply the growth control of high quality carbon nanostructure.

According to the 19th or 20th form of the present invention, by using of carrier gas for producing carbon nanostructure containing said oxidation gas such as water mixed in the range of 0.05ppm to 3% or oxygen mixed in the range of 0.01 ppb to 1 %, it is possible to perform easily and cheaply the growth control of high quality carbon nanostructure.

According to mixture gas for producing carbon nanostructure concerning the 21 st form of the present invention, since the raw-material gas, the carrier gas and the oxidation gas for producing carbon nanostructure are mixed beforehand, the supply mechanism supplying the oxidation gas in said reaction chamber independent of the raw-material gas is not necessary, thus it is possible to perform the supply of oxidation gas at supply time of raw-material gas and carrier gas, and to perform easily and cheaply the growth control of high quality carbon nanostructure.

According to the 22nd or 23rd form of the present invention, by using of mixture gas for producing carbon nanostructure containing said oxidation gas such as water mixed in the range of 0.05ppm to 3% or oxygen mixed in the range of 0.01 ppb to 1%, it is possible to perform easily and cheaply the growth control of high quality carbon nanostructure.

According to mixture gas for producing carbon nanostructure concerning the 24th form of the present invention, in said the 21 st to 23rd forms, since the reduction component of less than or equal to 1 ppm is included, it is possible to suppress the surplus oxidation of catalyst in the growth process of carbon nanostructure and to perform growth control more precisely.

According to the 25th form of the present invention, as the catalyst comprised of iron element is disposed beforehand in said reaction chamber and the raw-material gas is supplied in said reaction chamber with the oxidation gas excluding water, it is possible to produce the high quality carbon nanostructure while performing the catalytic oxidation. Especially, in the present form, as the use of water needs extra work such as bubbling treatment for refinement and the water easily adheres on the inner wall of reaction chamber of high temperature so that it is large the possibility that the adhering water gives the effect to growth of carbon nanostructure, it is possible to realize the simplification of production process by using of the oxidation gas except water, as enumerated in the 26th form of the present invention.

According to the 26th form of the present invention, in said 25th form, by using of the oxidation gas comprised of one or more substances selected from a group of oxygen, acetone, alcohol, DMF (dimethylformamide), CO2, CO, 03 and H2O2, it is possible to perform the oxidation treatment of catalyst with low price and to produce cheaply the high quality carbon nanostructure.

According to the 27th form of the present invention, by disposing beforehand the catalyst comprised of iron element in said reaction chamber and by supplying said raw-material gas in said reaction chamber with the oxidation gas so that the ratio of oxygen contained in said oxidation gas to said raw-material gas is variably controlled in growth process of the carbon nanostructure, it is possible to perform the production of high quality carbon nanostructure with high precision because of fine adjustment of catalytic oxidation and atomization.

According to the 28th form of the present invention, in said 27th form, since the variable control of said ratio is done by adjustment of the supply concentration of said raw-material gas, it is possible to perform the production of high quality carbon nanostructure with high precision because of fine adjustment of catalytic oxidation and atomization.

According to the 29th form of the present invention, in said 27th form, since the variable control of said ratio is done by adjustment of the supply concentration of said oxidation gas, it is possible to perform the production of high quality carbon nanostructure with high precision because of fine adjustment of catalytic oxidation and atomization.

According to the 30th form of the present invention, in the 27th, 28th or 29th form, by using of said oxidation gas comprised of one or more substances selected from a group of water, oxygen, acetone, alcohol, DMF (dimethylformamide), CO2, CO, 03 and H2O2, it is possible to perform the production of high quality carbon nanostructure with high precision because of fine adjustment of catalytic oxidation and atomization, and to perform the oxidation treatment of catalyst with low price , so that it is possible to produce cheaply the high quality carbon nanostructure.

According to the apparatus for producing carbon nanostructure concerning the 31 st form of the present invention, since said apparatus comprises the carrier gas supply means supplying the carrier gas in said reaction chamber, and the oxidation gas supply means supplying the oxidation gas in said reaction chamber, wherein before supplying and flowing said raw-material gas in said reaction chamber, said oxidation gas is supplied in said reaction chamber with said carrier gas by said carrier gas supply means and said oxidation gas supply means, so that said catalyst is converted to magnetite, it is possible to perform the continuous production of high quality carbon nanostructure by the catalyst converted to magnetite.

According to the 32nd form of the present invention, in said 31 st form, as said raw-material gas and said oxidation gas are flown for said magnetite in said reaction chamber, even though surplus carbon component is supplied from the raw-material gas in the slow continuous growth process, the catalyst oxidation and atomization are promoted through said oxidation gas flow, so that the catalytic action does not fall and it is possible to grow and produce continuously the high quality carbon nanostructure.

According to the 33rd form of the present invention, in the 31 st or 32nd form, by using of said oxidation gas comprised of one or more substances selected from a group of water, oxygen, acetone, alcohol, DMF (dimethylformamide), CO2, CO, 03 and H2O2, it is possible to perform the production of high quality carbon nanostructure with high precision and to perform the oxidation treatment of catalyst with low price through fine adjustment of the catalyst oxidation and atomization, so that it becomes possible to provide the apparatus for producing carbon nanostructure which can produce cheaply the high quality carbon nanostructure.

According to the 34th form of the present invention, in the 31 st, 32nd or 33rd form, since there is arranged the reduction gas supply means supplying a reduction gas in said reaction chamber, wherein a reduction gas is supplied in said reaction chamber from said reduction gas supply means before said magnetite conversion of said catalyst, so that an iron oxide component of said catalyst disposed in said reaction chamber is reduced, the catalyst naturally oxidized before the magnetite conversion is initialized by said reduction gas so as to control stably the oxidation degree of catalyst, so that it becomes possible to eliminate the dispersion of growth of carbon nanostructure and to provide the apparatus for producing carbon nanostructure which can produce the high quality carbon nanostructure.

According to the 35th form of the present invention, as said apparatus comprises the raw-material gas supply means supplying a raw-material gas in the reaction chamber, the catalyst composed of iron element disposed beforehand in said reaction chamber and the oxidation gas supply means supplying the oxidation gas except water in said reaction chamber so that said raw-material gas is supplied in said reaction chamber by said raw-material gas supply means, said oxidation gas is supplied in said reaction chamber by said oxidation gas supply means and said carbon nanostructure grows by said catalyst while flowing said raw-material gas and said oxidation gas in said reaction chamber, it becomes possible to provide the apparatus for producing carbon nanostructure which can produce the high quality carbon nanostructure while performing the catalyst oxidation. Besides, it is possible to realize the simplification of the production apparatus by employing the oxidation gas except water.

According to the 36th form of the present invention, said apparatus comprises the raw-material gas supply means supplying the raw-material gas in the reaction chamber, the catalyst composed of iron element disposed beforehand in said reaction chamber, the oxidation gas supply means supplying the oxidation gas in said reaction chamber and the oxygen ratio control means controlling variably the ratio of oxygen contained in said oxidation gas supplied in said reaction chamber by said oxidation gas supply means to said raw-material gas supplied in said reaction chamber by said raw-material gas supply means, so that said raw-material gas is supplied in said reaction chamber by said raw-material gas supply means, said oxidation gas is supplied in said reaction chamber by said oxidation gas supply means and said carbon nanostructure grows by said catalyst while flowing said raw-material gas and said oxidation gas in said reaction chamber, thus by fine adjusting the catalyst oxidation and atomization for said raw-material gas, it becomes possible to provide the apparatus for producing carbon nanostructure which can produce the high quality carbon nanostructure with high precision.

According to the 37th form of the present invention, in said 36th form, as said oxygen ratio control means performs variable control of said ratio by adjusting the supply concentration of said raw-material gas, by fine adjusting the catalyst oxidation and atomization, it becomes possible to provide the apparatus for producing carbon nanostructure which can produce the high quality carbon nanostructure with high precision.

According to the 38th form of the present invention, in said 36th form, as said oxygen ratio control means performs variable control of said ratio by adjusting the supply concentration of said oxidation gas, by fine adjusting the catalyst oxidation and atomization, it becomes possible to provide the apparatus for producing carbon nanostructure which can produce the high quality carbon nanostructure with high precision.

According to the 39th form of the present invention, in said 36th, 37th or 38th form, since it is used said oxidation gas comprised of one or more substances selected from a group of water, oxygen, acetone, alcohol, DMF (dimethylformamide), CO2, CO, 03 and H2O2, by fine adjusting the catalyst oxidation and atomization, it is possible to perform the production of high quality carbon nanostructure with high precision, and it becomes possible to perform the oxidation treatment of catalyst with low price and to provide the apparatus for producing carbon nanostructure which can produce cheaply the high quality carbon nanostructure.

### BRIEF DESCRIPTION OF DRAWINGS

FIG. 1 is an AFM image of catalyst comprising of iron element, magnetite and hematite.
FIG. 2 is an outlined schematic diagram of the apparatus for producing carbon nanostructure with high efficiency concerning the present embodiment.
FIG. 3 is a model diagram showing oxidation and atomization of catalyst of catalytic layer in a catalyst deposition substrate.
FIG. 4 is a SEM image of the carbon nanostructure that grew in example 1.
FIG. 5 (5A)∼(5C) shows a SEM image of catalyst surface tried the growth of carbon nanotube(CNT) by use of iron catalyst in helium carrier gas with oxygen concentration of 0(no oxygen), 0.1 to 0.5ppm and 1 ppm, respectively.
FIG. 6 is an X-ray diffraction diagram just before growth of carbon nano-tube of (1A) in FIG. 1.
FIG. 7 is an X-ray diffraction diagram just before growth of carbon nano-tube of (1B) in FIG. 1.
FIG. 8 is an X-ray diffraction diagram just before growth of carbon nano-tube of (1C) in FIG. 1.
FIG. 9 is a diagram showing the change of reaction time between iron catalyst condition and raw-material gas in example 3.
FIG. 10 is a SEM image of carbon nanotube in example 3.
FIG. 11 is a TEM image of carbon nanotube obtained by use of magnetite catalyst in example 3.
FIG. 12 is a SEM image of carbon nanotube when water concentration in carrier gas and raw-material gas is changed in example 4.
FIG. 13 is a SEM image of carbon nanotube when the water concentration in carrier gas and raw-material gas was changed in example 4.
FIG. 14 is a diagram showing the relation between CNT height and water concentration in example 4.
FIG. 15 is a diagram showing the relation between CNT height and water concentration in example 5.
FIG. 16 is a SEM image of two CNTs obtained in example 5.
FIG. 17 is a SEM image of CNT obtained in example 6.
FIG. 18 is a relation diagram between acetylene concentration and reaction time in example 7 when said acetylene concentration is variably changed in three steps.
FIG. 19 is a SEM image of CNT growing in example 7.
Fig. 20 is a SEM image in example 9, in which (20A) is a SEM image of CNT at 700°C and 10min holding time and (20B) is a SEM image of CNT at 700°C and 720min holding time.
FIG. 21 is an outlined schematic diagram of the conventional apparatus for synthesizing carbon nanostructure.
FIG. 22 is a process diagram of CVD growth process of carbon anostructure.
FIG. 23 is a relation diagram between CNT growth length and reaction time after the start of addition of raw-material gas in measurement example on rapid growth and slow growth.
FIG. 24 is a Raman spectrum and SEM image, in which (24C) and (24D) are SEM images for 2min and 30min in CVD reaction time, respectively and (24A) and (24B) are the diagrams showing intensity (unit au) to CNT Raman shift of 2min and 30min in CVD reaction time, respectively.

### DENOTATION OF REFERENCE NUMERALS

- 1: reaction heater
- 2: carbon nanostructure
- 3: gas exhaust pipeline
- 4: reaction chamber
- 5: opening and closing valve
- 6: catalytic structure
- 7: opening and closing valve
- 8: raw-material gas flow controller
- 9: raw-material gas inflow-line
- 10: electromagnetic three-way valve
- 11: opening and closing valve
- 12: electromagnetic three-way valve
- 13: oxygen flow controller
- 14: electromagnetic three-way valve
- 15: water addition apparatus
- 16: gas flow controller
- 17: water analyzer
- 18: electromagnetic three-way valve
- 19: monitoring bypass line
- 20: gas flow controller
- 21: oxygen analyzer
- 22: oxygen flow controller
- 23: oxygen flow controller

### BEST MODE FOR CARRYING OUT THE INVENTION

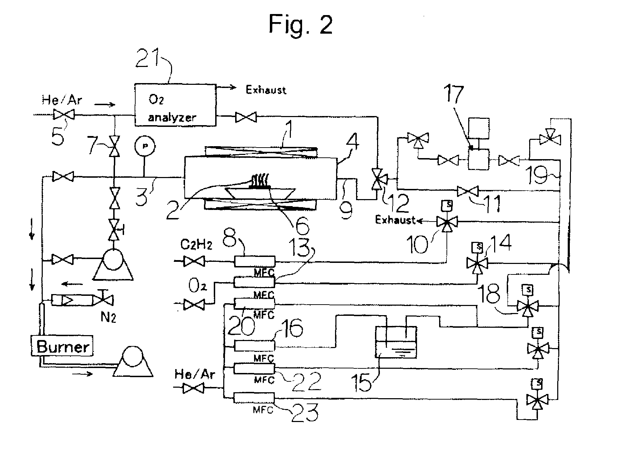

As follows, the preferred embodiments of the high efficient process for producing carbon nanostructure growing continuously and the apparatus for producing carbon nanostructure provided with the gas for production and the gas supply device for production are explained in details based on the drawings. FIG. 2 is an outlined schematic diagram of the apparatus for producing carbon nanostructure with high efficiency concerning the present embodiment. This high efficient apparatus for synthesization is an apparatus for producing carbon nanostructure which can produce the carbon nanostructure by use of CCVD method. Reaction chamber 4 is heated by reaction heater 1 and catalytic structure is arranged in this reaction chamber 4. Carbon nanostructure 2 grows on the surface of this catalytic structure 6 by catalyst chemical vapor deposition method, and carbon nanotube as carbon nanostructure 2 is illustrated in this embodiment.

Catalyst structure 6 is the base formed catalyst on its surface, and as for the base shape, there are various kinds of forms such as substrate, multilayer substrate, tube, polyhedron, pellet and powder. In addition, employed catalyst is composed of iron element.

Gas exhaust pipeline 3 is communicated with one end of reaction chamber 4, and the flow line coupled to said gas exhaust pipeline 3 is connected to the carrier gas container (not shown) through the opening and closing valves 5, 7. Mixed gas of helium He and argon Ar is employed as carrier gas. As carrier gas, there are inert gas and their mixture gas such as not only helium He and argon Ar but also neon, N2, CO2 and krypton. Carrier gas is the gas transporting raw-material gas and has the property not consuming because of no reaction with other substances, although the raw-material gas consumes by reaction.

The raw-material gas from raw-material gas container (not shown) is supplied in the reaction chamber 4 through raw-material gas inflow line disposed at other end of the reaction chamber 4, and the raw-material gas in the raw-material gas container is depressurized to a predetermined pressure by regulator (not shown). The depressurized raw-material gas is adjusted to a predetermined flow by raw-material gas flow controller 8 composed of mass flow controller (MFC). The raw-material gas flow controller 8 is installed to inflow line communicating with the raw-material gas inflow line 9 and the raw-material gas is supplied through the electromagnetic three-way valves 10, 12 and the opening and closing valve 11. Carrier gas is supplied from said carrier gas container, and it is supplied so as to join with the raw-material gas inflow line 9 through a duct of two systems in which the gas flow controllers 22, 23 were installed, as described later.

As raw-material gas, organic gas such as sulfur component organic gas and phosphorus component organic gas is broadly used as well as hydrocarbon, and it is chosen the organic gas preferable for generation of carbon nanostructure of particular structure. In addition, hydrocarbon is preferred especially in organic gas in the sense that extra material is not generated.

As hydrocarbon, there can be used alkane compound such as methane and ethane, alkene compound such as ethylene and butadiene, alkine compound such as acetylene, aryl hydrocarbon compound such as benzene, toluene and styrene, aromatic hydrocarbon having condensed ring such as indene, naphthalene and phenanthrene, cycloparaffin compound such as cyclopropane and cyclohexane, cycloolefin compound such as cyclopentene, and alicyclic hydrocarbon compound having condensed ring such as steroid. In addition, it is possible to employ the mixture hydrocarbon gas that two kinds or more of the above-mentioned hydrocarbon compound are mixed. In particular, even in hydrocarbon, it is preferably low molecule such as acetylene, allylene, ethylene, benzene and toluene.

In the apparatus for producing carbon nanostructure of the present embodiment, the catalytic structure 6 comprised of iron element is disposed beforehand in the reaction chamber 4 so that said carbon nanostructure grows by said catalytic structure 6 while flowing the raw-material gas in said reaction chamber, wherein before supplying and flowing said raw-material gas in said reaction chamber 4, said oxidation gas is supplied in said reaction chamber 4 with said carrier gas, so that said catalytic structure 6 is converted to magnetite. In addition, also in the growth process of carbon nanostructure by the catalytic structure 6, it is designed to flow the raw-material gas and the oxidation gas in the reaction chamber 4.

The oxidation gas employing in the present embodiment is water mixed in the range of 0.05ppm to 3%, and oxygen mixed in the range of 0.01 ppb to 1%. Oxygen is adjusted to be a predetermined flow by the oxygen flow controller 13 composed of mass flow controller (MFC) from oxygen cylinder (not shown) filled with a predetermined concentration by a gravimetric method. Said oxygen flow controller 13 is installed in the inflow line communicating with the raw-material gas inflow line 9, and oxygen is supplied in said reaction chamber 4 through the electromagnetic three-way valve 14 and the opening and closing valve 11. In addition, oxygen analyzer 21 is installed in introduction line of carrier gas before the opening and closing valve 11, and oxygen from the oxygen cylinder is introduced into this oxygen analyzer 21, which watches so as to supply the oxygen of suitable concentration in said reaction chamber 4. Water addition device 15 is composed of water vessel provided with heater, and carrier gas such as He and Ar is introduced into warm water of said water addition device 15 through gas flow controller 16, thus the mixture gas of water and carrier gas added water by flow mixture method is supplied in said reaction chamber through the electromagnetic three-way valve 18 and the opening and closing valve 11. Said carrier gas is joined and mixed even at an outlet side of said water addition device 15 through gas flow controller 20. Water analyzer 17 is arranged with monitoring bypass line 19 installed in mixture gas introduction line of water and carrier gas, and said water analyzer 17 monitors so as that water of the suitable concentration is supplied in said reaction chamber.

In general, impurity is included in commercial carrier gas and raw-material gas at, source gas at manufacture stage. As described above, the inert gas such as He, neon, argon, N2, CO2, krypton and xenon is enumerated as carrier gas, and it can be utilized He and Ar to be especially cheap and easily available. By way of example only, as related to minor constituent in helium gas manufactured by Taiyo Nippon Sanso Corp., oxygen (<1ppm) and water (<2.6ppm) etc are contained in G2 grade, and oxygen (<0.05ppm) and water (<0.54ppm) are contained in G1 grade, so that this dross inclusion can be utilized as oxidation gas, and furthermore it can be utilized by refining to lower concentration level using a deoxidizing agent and an adsorbent. In addition, although in normal general grade, oxygen and water are contained much more than in high purity grade, it becomes available if it is refined. There are enumerated the refinement methods in which the deoxidizing agent such as Pd, Ni, Mn, Zr-system metal and Ti-system metal, and the adsorbent such as zeolite, alumina, and silicagel etc are utilized.

Also as related to Ar, oxygen (<0.2ppm) and water (<0.54ppm) are contained in G2 grade, and oxygen (<0.1ppm) and water (<0.54ppm) are contained in G1 grade, so that they can be utilized by refining them as well as He.

Not only hydrocarbon but also organic gas such as sulfur component organic gas and phosphorus component organic gas preferable for generation of carbon nanostructure can be selected as raw-material gas. The hydrocarbon that does not generate extra material in organic gas is preferred. In particular, since acetylene gas, C2H2, is cheap and easily available, and it has the high reactivity for catalyst utilized in the case producing carbon nanostructure because of triple bond, it can be used as the raw-material gas which can generate carbon nanostructure in the lowest temperature range.

Now, as shown in lower formula 1, acetylene is generated by a manufacturing method using a reaction between calcium carbide and water, and its main application is metal fusion cutting, so that even after dry process, the generally normal dissolved acetylene includes several % of water. It is slightly included about oxygen, too.

Ca C2+2H2O → Ca (OH) 2+C2H2+32 kcal/mol. (formula 1)

Moreover, since acetylene causes autolysis in the case of high pressure and it becomes very unstable gas, so that commercial and general dissolved acetylene is pressurizedly dissolved in solvent such as acetone and DMF (dimethylformamide) permeated into porous material in the container, and it can be handled to be stable and safe.

Necessarily, when acetylene is taken out from the container, there was a problem that the concentration of solvent such as acetone and DMF that volatilize with acetylene changes dependent of container pressure and container temperature. As acetone and DMF has the oxidation action, the change of amount of acetone and DMF in the raw-material gas caused in generation of carbon nanostructure that the yield becomes bad, the reproducibility of length of carbon nanostructure disappears and its generation suddenly stops.

Therefore, In the present embodiment, acetylene of raw-material gas is refined so as to restrict oxygen, water and solvent such as acetone and DMF less than or equal to 1 ppm, and by adding necessary oxidation constituent such as oxygen, water and solvent, the effectivity of minor constituent for generation of carbon nanostructure was confirmed.

Next, the gas flow line switch mechanism is explained. The electromagnetic three-way valve 10 is controlled to a cutoff state and a supply state by the action of automatic valve controller (not shown). That is to say, in the cutoff state of raw-material gas, the raw-material gas is exhausted to exhaust side and in the supply state of raw-material gas, the raw-material gas is supplied to injection side, so that the raw-material gas is mixed with carrier gas at the confluence portion reaching the opening and closing valve 11.

When the electromagnetic three-way valve 10 is employed, since the raw-material gas is already controlled in a predetermined flow, the initial fluctuation of the raw-material gas does not exist even though it is switched to the injection side. Besides, the switching is performed instantly without pressure fluctuation because of switch due to electromagnetic action, so that there is no slow rise up of the raw-material gas, and the raw-material gas of the predetermined flow is supplied instantly. In addition, even when the raw-material gas is switched from supply state to cutoff stat, the flow of raw-material gas can be instantly switched to zero without pressure fluctuation because of the electromagnetic action due to the automatic valve controller, so that there is no slow drop down of the raw-material gas.

As described thus, if the electromagnetic three-way valve 10 is used, the supply and cutoff of the raw-material gas in the reaction chamber 4 can be instantly performed, and the fluctuation of flow does not exist in the changing process at all. Therefore, if the total flow is constant, the internal gas pressure of the reaction chamber 4 becomes constant. Since the raw-material gas is decomposed under constancy of this total pressure (gas pressure), pressure fluctuation does not occur in the interior of reaction chamber 4 and the gas condition of catalytic structure 8 becomes to be constant, so that there is the action that the growth of carbon nanostructure 8 is promoted.

After carrier gas and raw-material gas were mixed at said confluence portion, and this mixture flow is supplied to the reaction chamber 4 from the gas supply nozzle (not shown) installed with the tip end of raw-material gas inflow line 9. The reaction chamber 4 is heated at the temperature range easy to generate carbon nanostructure most, and the raw-material gas is thermally decomposed in vicinity of catalytic structure 6, so that the carbon nanostructure 2 grows from decomposition product on the surface of the catalytic structure 6.

In the present embodiment, thermal decomposition method was used to decompose the raw-material gas in chemical vapor deposition method, but it can be utilized other decomposition method such as laser beam decomposition method, electron beam decomposition method, ion beam decomposition method and plasma decomposition method. At all events, carbon nanostructure 2 is formed from these decomposition product on the surface of catalytic structure 6. On the surface of the catalytic structure 6, a part of the raw-material gas is converted to carbon nanostructure, and the unreacting raw-material gas that did not contribute to reaction is exhausted from gas exhaust pipeline 3 along with carrier gas.

By using of the apparatus for production concerning the present embodiment, the process growing highly oriented carbon nanotube is explained on the basis of FIG. 21.

### Catalyst Substrate Preparation and Deposition Process

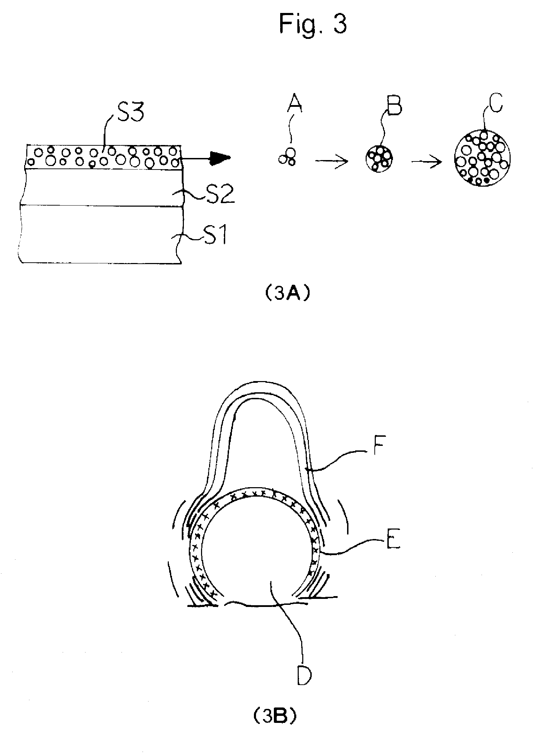

From view points of stability due to reaction temperature, smoothness of surface, price and recycle, as shown in FIG. 3(3A), there are used silicon substrate or silicon substrate provided with silicon oxide layer S2 that the surface of silicon substrate S1 is sufficiently oxidized, and they have the property not forming compound with iron catalyst at the temperature of 600°C to 1200°C that are a condition to synthesize carbon nanostructure. This situation is important.

When oxidation and atomization of catalyst occur in the temperature up process before synthesization reaction of carbon nanostructure, affinity between substrate and catalyst becomes a important key. When the catalyst generates a compound with the substrate and it shows the strong affinity with the substrate, it becomes clear that the good atomization does not occur and the generation of carbon nanostructure extremely falls.

When roughness of the substrate surface is equal to or less than several nanometers order and the surface tension is superior to the surface affinity in the process of atomization of iron catalyst, the catalyst particles contact with raw-material gas while holding spherical form, so that it is understood that it becomes profitable to formation of carbon nanostructure.

An approach to layer iron catalyst on the substrate does not ask means such as Ar sputter, electron beam evaporation method, dip coating method and spin coat method, but it is important to form the catalyst film of thickness of nanometer order.
In powder, if the dispersion state in liquid is nanometer order and they disperses uniformly in liquid phase, and if it is possible to form the catalyst particles of several nm to several tens nm order as iron oxide in the temperature up process, there is no restriction particularly.

### Temperature Up Process

In the substrate which layered catalyst, oxidation and atomization of catalyst occur simultaneously at the time of temperature up in catalytic layer S3 on silicon oxide layer S2 as shown in FIG. 3 (3A). At this time, concentration of minor impurity of carrier gas gives a big effect to oxidation and atomization of catalyst. Until now, when the temperature up is performed under the atmosphere of sufficiently high oxygen concentration such as oxygen and air in the temperature up process, since the catalyst is oxidized too much, it becomes clear that the catalyst is not atomized sufficiently in normal reaction temperature of 700°C and carbon nanotube does not grow.

Besides, in a condition without oxygen and water, the catalyst of metallic state with several nm thickness starts fluidization because the normal reaction temperature of 700°C is too high, and since the size in atomization becomes larger than catalyst diameter ideal for formation of carbon nanostructure, it becomes clear that the generation probability of carbon nanotube extremely falls.

Therefore, in the catalyst oxidized moderately by proper oxygen concentration or water concentration, minute polycrystal particles A less than or equal to 1 nm combine each other in the deposition process, and the big particles B, C of several nm or several tens nm order are formed, as shown in Fig. 3(3A). This is the so-called atomization process. Furthermore, the situation that oxide is formed at the vicinity of surface in atomization process is an ideal condition.

### Rapid Growth Process After Start Of Raw-material Supply

When it starts to supply acetylene gas of raw-material gas, the synthesis reaction of nanotube is composed of two stage reactions such as initial rapid growth and slow growth while generating amorphous carbon. This situation becomes clear.

It is explained the case that acetylene is used as raw-material gas, but the similar mechanism holds about other raw-material gas, too. Particularly, the initial rapid reaction is the reaction that is rate-determining reaction itself composed of the following formula 2 and 3 on the surface of iron catalyst.

Fe2O3+C2H2 → 2FeC+H2O+CO2 (formula 2)

Fe3O4+C2H2 → FeO+2FeC+H2O+O2 (formula 3)

If this initial rapid reaction satisfies the conditions such as moderate affinity between catalyst and substrate, proper oxidation in the temperature up process, atomization, sufficient amount of raw-material gas for catalyst amount and fluctuation suppression at introduction time of raw-material gas, it is possible to achieve the generation of carbon nanotube with CNT length of 50µm to 100µm. However, as to the rapid growth of first stage, it stops when a quantity of oxygen that catalyst holds is consumed by reaction. Normally, when the catalyst surface is covered by surplus amorphous carbon supplied from raw-material gas, the contact between catalyst and raw-material gas becomes difficult, so that the reaction reaches to stop finally.

Since the length of carbon nanotube becomes almost the same in the case that oxygen which catalyst particle holds is the same degree, there is the reproducibility and it can be understood that the length of carbon nanotube is determined by the holding amount of oxygen of initial catalyst.

Next, it is explained the slow growth while generating amorphous carbon, by which it becomes necessary to produce carbon nanostructure whose length is controllable. The slow reaction can be understood to be the reaction that is rate-determining surface diffusion of carbon mainly composed of the following formula 4 and 5.

FeO+C2H2 → FeC+H2O+C (formula 4)

Fe+C2H2 → FeC+C+H2 (formula 5)

As shown in Fig. 3(3B), on the catalyst particle D contacting with acetylene, there is formed the particulate catalyst carbide (FeC) bonding to carbon and the multilayered layer F composing a wall of carbon nanotube is formed on the surface of the carbide, so that since amorphous carbon generated by reaction between catalyst and raw-material gas pushes said multilayered layer F out, carbon nanotube is formed. An arrow of (3B) shows the diffusion direction of carbon.

At this time, when the affinity between catalyst and substrate is strong, the catalyst particle does not become spherical, and the carbon layer of both sides is not pushed with an equal speed, namely these are the reasons why carbon nanotube does not orient in perpendicular. In addition, when there is not the affinity between substrate and catalyst at all, the carbon layer goes to the substrate, so that the catalyst exists at the tip of nanotube and the growth of carbon nanotube occurs.

In the case of moderate affinity, the carbon layer elongates perpendicular to some extent, and the catalyst rises because the affinity is against the force pushed by diffusion of carbon, so that there is also the case that the catalyst exist at the intermediate point of the length direction of carbon nanotube.

As for the catalyst, since carbon generated by reaction of formula 4 and 5 burns and is removed on the catalyst surface by oxygen and water contained in carrier gas and/or raw-material gas, it becomes possible to generate continuously carbon nanostructure. As judged from a transmission electron microscope image (not shown) of catalyst particle after growth, it becomes clear that the whole particle of catalyst particle D gets one crystal of carbide.

### Example 1

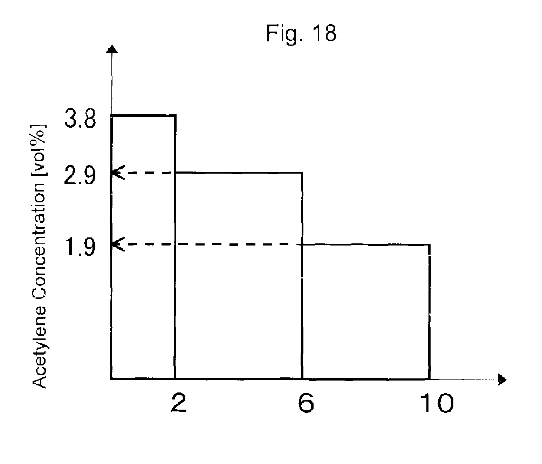

The production examples using the high efficient apparatus for producing carbon nanostructure concerning the present embodiment are explained as follows.
It is the example which produced high orientation type carbon nanotube using general He as the carrier gas and general acetylene as the raw-material gas. At this time, there were included oxygen of 50ppb and water of less than 0.5ppm as minor constituent in He, and DMF of 100ppm and water of 200ppm as minor constituent in raw-material gas. The raw-material gas concentration was 23%, and the addition time of raw-material gas (CVD time) was 30sec. In this production condition, the long high orientation carbon nanotube with about 100 µm in length grows in high density. In the catalyst deposition process and the temperature up process shown in Fig. 18, this example 1 adopts a mode progressing the moderate oxidation by oxygen of impurity included in carrier gas. As a result, by only supplying the raw-material gas during a short time, it became possible to grow carbon nanotube with the use of only the rapid growth condition and to obtain the ideal result. In addition, by performing the short time addition (30sec) of the raw-material gas, as a result, the raw-material gas concentration goes to decrease at about 1 min, so that it is repressed to accumulate the carbon on the catalyst by surplus raw-material gas, and after it went to the slow growth, the growth of carbon nanotube stops at the time at which the raw-material concentration became zero.

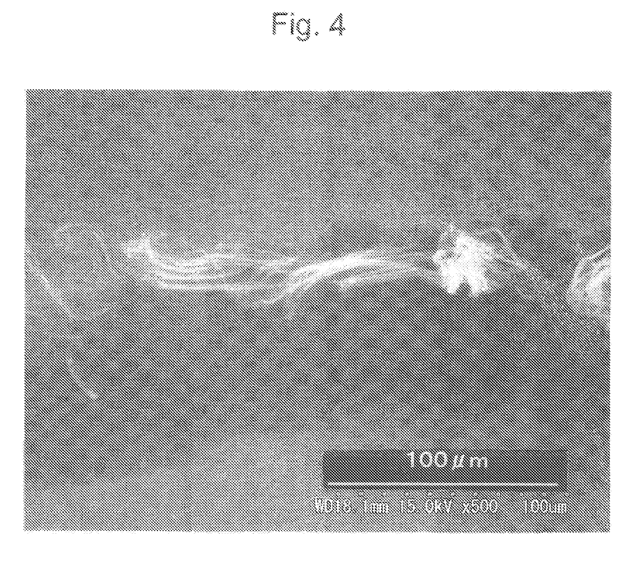

In the present embodiment 1, the growth result of 100µm in height was obtained by the short time addition (30sec) of raw-material gas. FIG. 4 was the SEM image of the carbon nanostructure that grew, and CNT with high vertical orientation and high density was obtained. This CNT was compared with data obtained so far from the world, and how position it exists at was examined. The results are shown in Table 1.

**Table 1 Comparison of growth height and growth rate of carbon nanotube**

| <Article> | <Growth Height> | <Growth Rate> |
|---|---|---|
| Chem.Phys.Lett. 362(2002)385. | 1.5mm(30min) | ∼ 50 µm/min |
| Appl.Phys.Lett.77(2000)830. | 12 µm | ∼6 µm/min |
| Nature 338(1997)52. | 40 µm | 3.3 µm/min |
| Science 282(1998)1105. | 50 µm | 2 µm/min |
| example 1 (present inventors) | 100 µm(30sec) | 200 µm/min |

For mass production of carbon nanotube, it is necessarily requested to raise the growth rate. It is shown that the growth rate of the present inventors is faster than all world data in regard to the growth rate of height direction. From this result, it is dominant the rapid growth (the first growth mechanism that the reduction reaction of catalyst for raw-material gas on the catalyst surface is mainly, and in the case of ideal condition, this result shows how fast the rapid growth rate is.

### Example 2

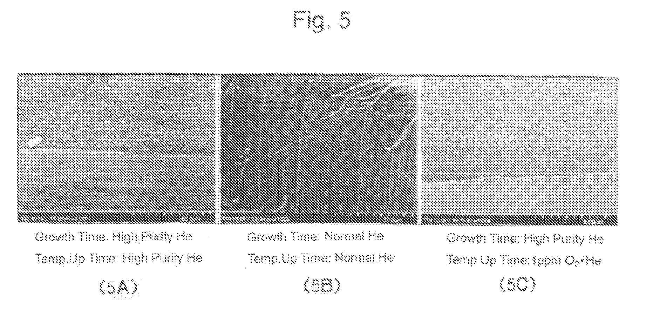

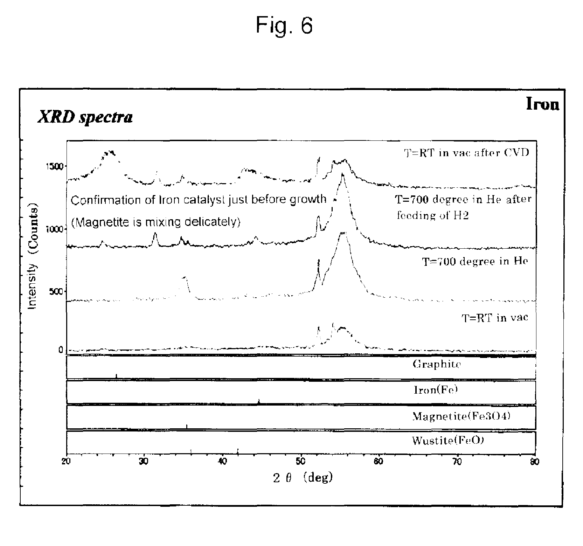

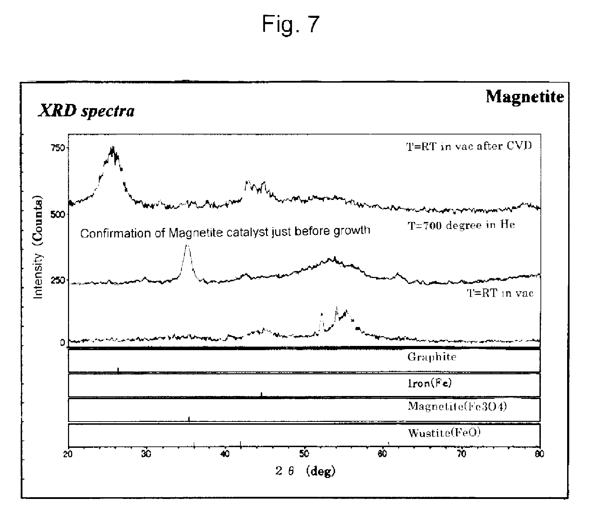

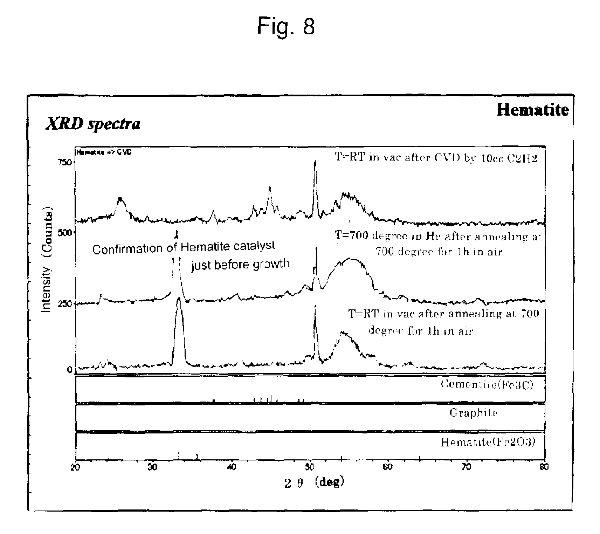

The example 2 is a measurement example done to confirm the effect of oxygen introduction in the high efficient apparatus for producing carbon nanostructure concerning the present embodiment. Since water concentration<0.5ppm and DMF concentration<10ppm at addition time of raw-material gas are confirmed with raw-material gas concentration of 23%, CVD was performed under the condition that the effect of oxidation gas except oxygen is very small. FIG. 5 (5A) ∼ (5C) show SEM images of the catalyst surface trying growth of carbon nanotube (CNT) by using of iron catalyst and helium carrier gas containing oxygen concentration of 0ppm (not contained), 0.1 ∼0.5ppm and 1 ppm, respectively. In the case of Fig. (5A) containing no oxygen, there is no growth of CNT. In the case of Fig. (5B) containing oxygen of 0.1 ∼0.5ppm, iron catalyst is converted to magnetite, so that high quality CNT grew. In the case of Fig. (5C) containing rich oxygen of 1 ppm, iron catalyst is converted to hematite by excessive oxidation, so that the growth of high quality CNT was not obtained. FIG. 1 mentioned above shows the result observing the catalyst surface just before growth of carbon nanotube of example 2 by AFM. Further, FIG. 6 to FIG. 8 shows the X-ray diffraction results just before growth of each carbon nanotube of FIG. 1 (1A) to (1C), respectively, and the existence of said magnetite and hematite was confirmed. According to the embodiment 2, by using of gas containing moderate oxygen such as several hundreds ppb in carrier gas, moderate catalyst oxidation and oxidation combustion of amorphous carbon generated excessively from raw-material gas at the time of carbon nanotube generation are performed, so that it is possible to achieve the continuous growth of CNT while holding contact between catalyst and raw-material gas.

### Example 3

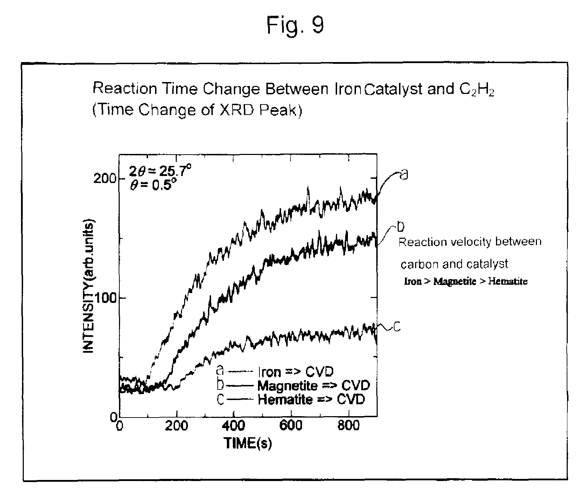

The example 3 is a measurement example done to confirm the change of reaction time between iron catalyst state and raw-material gas (acetylene) in the high efficient apparatus for producing carbon nanostructure concerning the present embodiment. In example 3, carrier gas and raw-material gas are introduced in X-ray diffraction instrument, and the predetermined reaction temperature is set, so that synthesis of carbon nanotube was performed while confirming the X-ray diffraction of catalyst. FIG. 9 shows the change of reaction time between iron catalyst state and raw-material gas. The X-ray diffraction instrument employed in example 3 is the diffraction instrument manufactured by JEOL Co., Ltd., and as a heater is installed in a cell, it is the apparatus by which X-ray diffraction is observable while synthesizing a carbon nanomaterial. From the measurement due to this X-ray diffraction instrument, when the reaction time change a, b and c of the raw-material gas (acetylene) with iron catalyst, magnetite catalyst and hematite catalyst, respectively are compared, it is found that the reaction proceeds fastest in iron catalyst and it falls in order of magnetite catalyst and hematite catalyst.

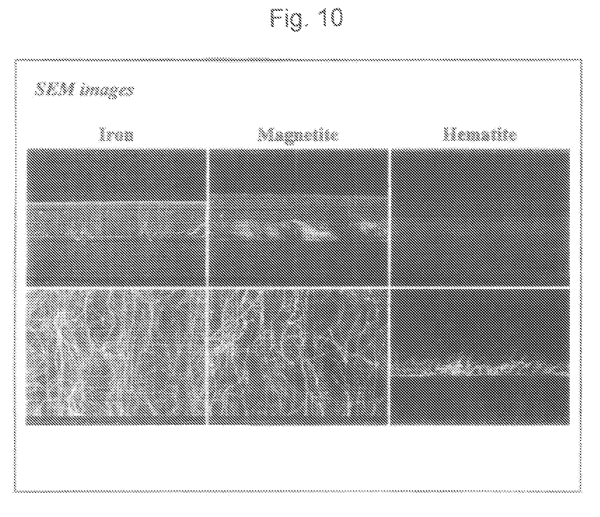

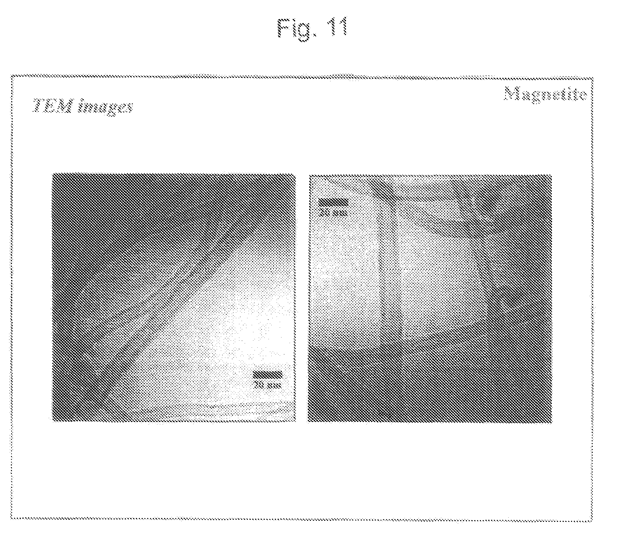

FIG. 10 shows the SEM image of carbon nanotube synthesized by use of three kinds of catalysts on the basis of control of impurity component in the embodiment 3. FIG. 11 shows the TEM image of high quality carbon nanotube obtained by use of magnetite catalyst growing most efficiently on the basis of control of impurity component.

Although the reaction rate between carbon and catalyst in the iron catalyst, is fast, the generation probability of carbon nanotube falls by enlargement of catalyst particle size according to AFM observation of catalyst particle just before reaction as shown in FIG. 1. In magnetite whose oxidation state of catalyst is moderate, since the growth rate is high and the catalyst particle size of about 10∼20nm is observed in AFM evaluation of the catalyst surface, by proper control of minor constituent in carrier gas and raw-material gas, it is shown that there is set the condition that the reaction rate with raw-material gas is high and the generation probability of carbon nanotube is high in atomization process of catalyst.

### Example 4

The example 4 is a measurement example done to confirm the effect of water introduction in the high efficient apparatus for producing carbon nanostructure concerning the present embodiment. The CVD reaction temperature is 670°C, and the raw-material gas concentration is 13vol %. In order to remove the effect of oxygen in carrier gas and raw-material gas, it was used the carrier gas such as the high purity He gas produced by Taiyo Nippon Sanso Corp. (purity 99.999%, oxygen<0.05ppm, water<0.5ppm, nitrogen<0.1 ppm, CO<0.02ppm, CO2<0.02ppm, CH4<0.01 ppm) and it was used the raw-material gas such as the high purity acetylene produced by Nikko Nichigo Corp. (C2H2:More than 99.999%, O2<1ppm, N2<1 ppm, CO<0.05ppm, CO2 <0.1 ppm, CH4<0.05ppm). Water addition is done at the position before reaction chamber 4, and oxygen concentration and water concentration were measured using oxygen analyzer 21 and water analyzer 17.

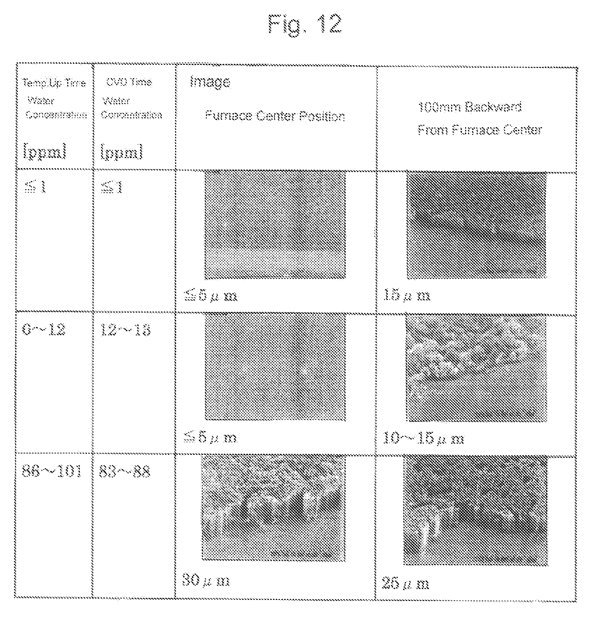

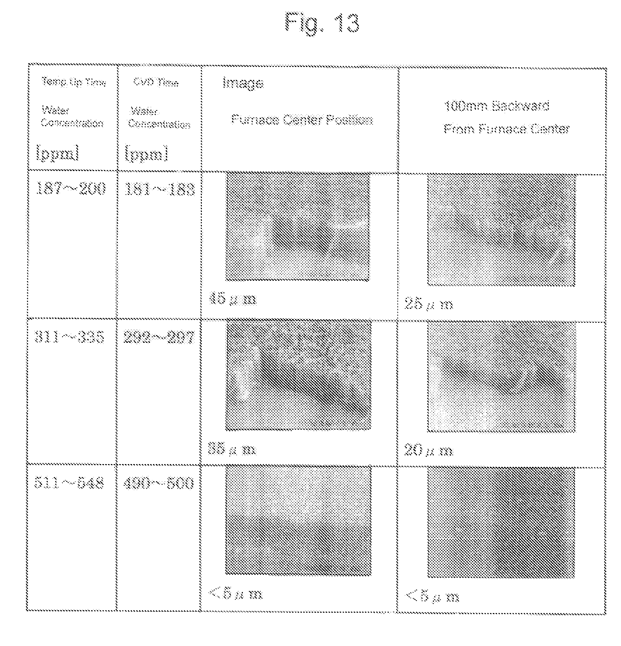

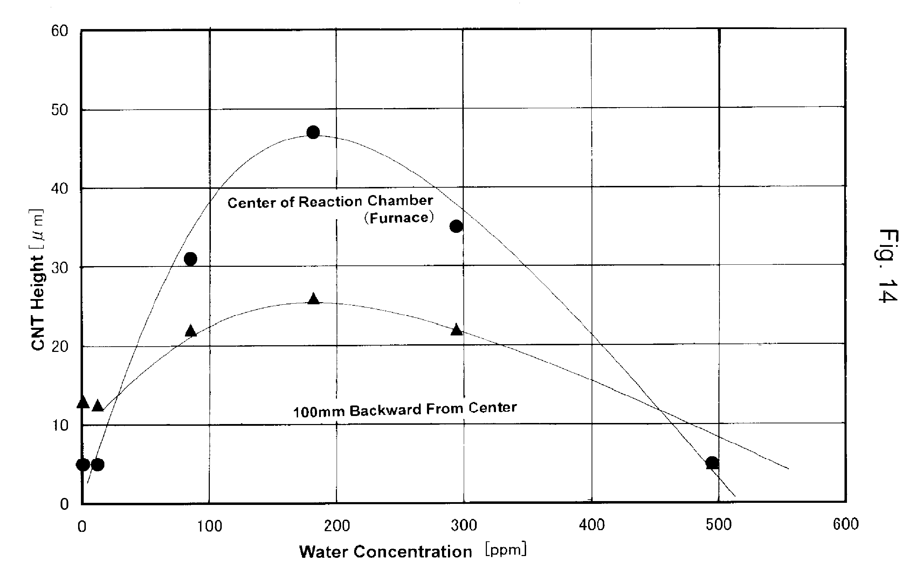

FIG. 12 and FIG. 13 show the SEM images of carbon nanotube when water concentration in raw-material gas is changed in example 4. The SEM images of each CNT shown in FIG. 12 and FIG. 13 are the images at the center position of reaction chamber (furnace) and 100m backward position from the center, respectively. FIG. 14 summarizes the relation between CNT height and water concentration obtained from these measurement results. The point that should be paid attention most is that the height of growing nanotube shows maximum in the vicinity of 200ppm of water concentration in carrier gas and raw-material gas. In the water whose oxidation action for catalyst is weak, being different from oxygen, when the water concentration is lower than 200ppm, the catalyst is not oxidized sufficiently in catalyst oxidation process and atomization process of temperature up stage, so that the height of CNT growing is not enough, and since carbon generated from acetylene of the raw-material gas accumulates around the catalyst at the reaction time, it is not removed sufficiently by the reaction in the case of the low water concentration so that the catalyst loses its activity.

On the other hand, when the water concentration is around 500ppm in the catalyst oxidation process and atomization process of the temperature up stage, it is achieved that the catalyst is oxidized too much and the supply of carbon generated from the raw-material gas is disturbed because of too much water.

Furthermore, as what should have been paid attention, under the condition that the oxygen and water do not exist at all, carbon nanotube did not generate at all. This is due to the deactivation of catalyst in early stage, because, in the oxidation and atomization of catalyst of the temperature up process, the probability of moderate oxidation of catalyst drops and there is no oxidation action by the minor constituent at the supply time of raw-material gas.

### Example 5

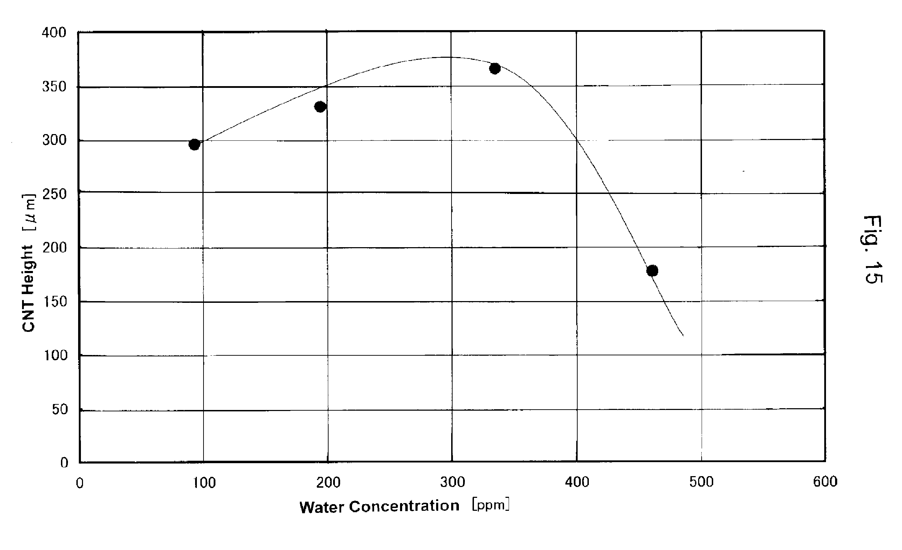

In example 5, CVD growth temperature is performed at 700 °C, and other conditions are similar to example 4. FIG.15 is the relation between CNT height and water concentration. CNT height shows the peak at about 300ppm of water concentration. Since the reaction temperature is high in comparison with example 4, the diffusion rate of carbon on the catalyst surface becomes large based upon the effect of temperature in the moderate growth stage that is diffusion rate-determining, so that the high growth of CNT is observed. In addition, because the diffusion rate is large, the reaction rate between raw-material gas and catalyst increases according to the diffusion rate, so that the amount of carbon accumulating on the catalyst increases. It was clear that the condition that the water concentration which is the oxidation gas to make surplus carbon burn is 300ppm being more 100ppm than example 4 is the condition that the longest CNT grows.

### Example 6

Example 6 is the measurement example that there are CVD reaction temperature of 670°C, raw-material gas concentration of 3.8vol% and CVD reaction of 10min using the same carrier gas and raw-material gas as example 4. It was used the catalyst in example 6 whose specification is Fe layer of 4nm deposited on silicon oxide layer of 1000A formed on silicon substrate surface. The flows of carrier gas and raw-material gas are 250sccm and 10sccm, respectively.

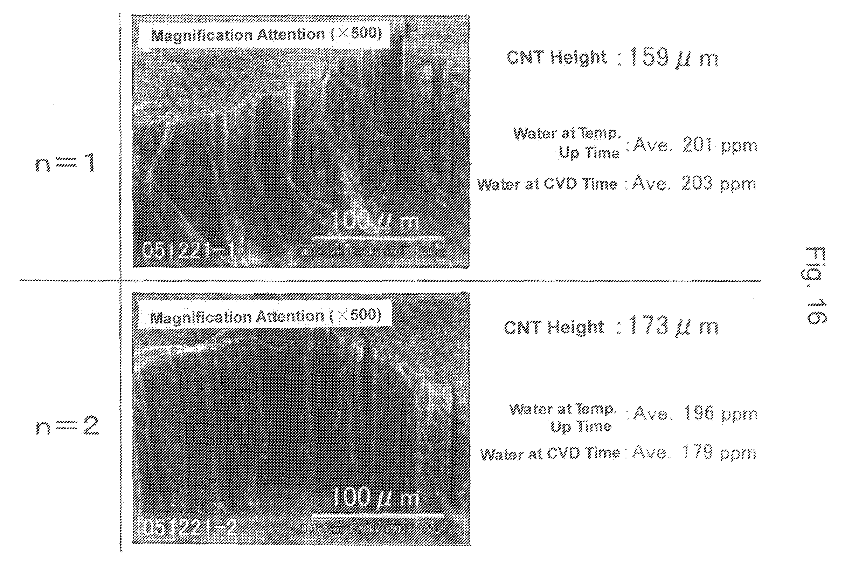

FIG. 16 is the SEM image of CNT under the condition that decreased the raw-material gas concentration in the case of water concentration 200ppm contained in carrier gas and raw-material gas in example 6. Oxygen concentration in the temperature up process was 50∼70ppb. Since the carbon accumulation rate is decreased by fall of the raw-material gas concentration at the time of raw-material supply, it was confirmed that the growth of carbon nanotube longer than the past is obtained.

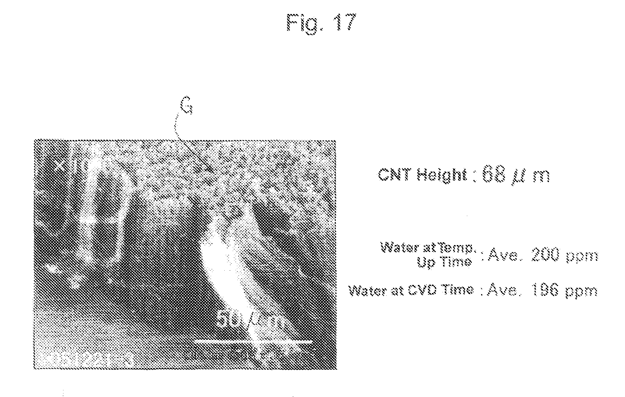

Next, while using almost the same growth conditions as said example 6, namely CVD reaction temperature of 700°C and raw-material gas concentration of 3.8vol%, it is shown the measurement example that CVD reaction was performed with the half reaction time (5min). FIG. 17 shows the SEM image of growing CNT obtained with half of the reaction time.

When the reaction time was made half, the height of CNT became half. This proves that it is dominant the rapid growth (first growth mechanism) that the reduction reaction due to acetylene being the raw-material gas becomes central for oxygen held by catalyst in the short reaction time (to the extent that the height of carbon nanotube is 70µm). Therefore, it becomes possible to generate the high quality carbon nanotube by the longer reaction time under the existence of moderate oxygen and water.

In order to grow continuously toward height longer than 70µm, it is shown that it is necessary to burn and remove appropriately carbon accumulating on the catalyst by the existence of minor constituent gas, in other words, by the existence of moderate amount of oxygen and water being minor constituent contained in raw-material, or DMF and acetone being solvent in the case of acetylene used limitedly as raw-material gas.

### Example 7

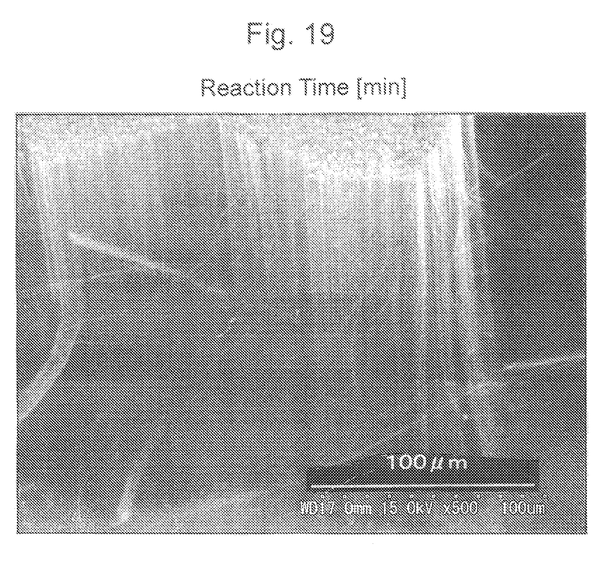

Example 7 is the measurement example in the case that the acetylene concentration is changed in a plurality of steps on the way of growth of carbon nanotube. FIG. 18 is the relation diagram between acetylene concentration and reaction time changing the acetylene concentration in the three steps. The CNT grew in the total time of only 10min by changing the concentration to 3.8vol% at first, 2.9vol% from 2min and 1.9vol% from 6min. In carrier gas of this time, oxygen concentration was 50ppb and water concentration<0.5ppm, and at the addition time of raw-material gas, oxygen concentration was 50ppb and water concentration<0.5ppm. The other conditions are similar to example 6. FIG. 19 is the SEM image of CNT that grew. As the supply amount of raw-material gas is satisfied in the initial rapid growth by lowering the raw-material gas concentration on the way of CVD, and the accumulation of carbon on the catalyst is repressed, it is found that it is possible to realize carbon nanotube growing continuously.

### Example 8

The synthesis experiment of carbon nanocoil was performed with the oxidation gas. As catalyst, it was used Fe · In · Sn catalyst that iron thin film of 20nm was deposited on ITO thin film (film thickness 100nm) of glass substrate. The raw-material gas is C2H2 of 30sccm, the carrier gas is He of 165sccm and said catalyst is arranged in the reaction chamber heated at 700°C, so that said raw-material gas and carrier gas were flew in said reaction chamber for 30min. In this gas flow, coil yield was more than 85% when the water concentration which is oxidation gas is 550∼650ppm, and the coil yield became less than 20% when the water concentration is less than 0.01ppm. It was done that the coil yield is grasped quantitatively by the method to measure the number of carbon nanocoils of SEM image of the substrate. The continuous growth of carbon nanocoil is promoted by addition of the oxidation gas, so that the yield increased. Therefore, when the oxidation gas is flew, it was found that the coil yield increases.

### Example 9

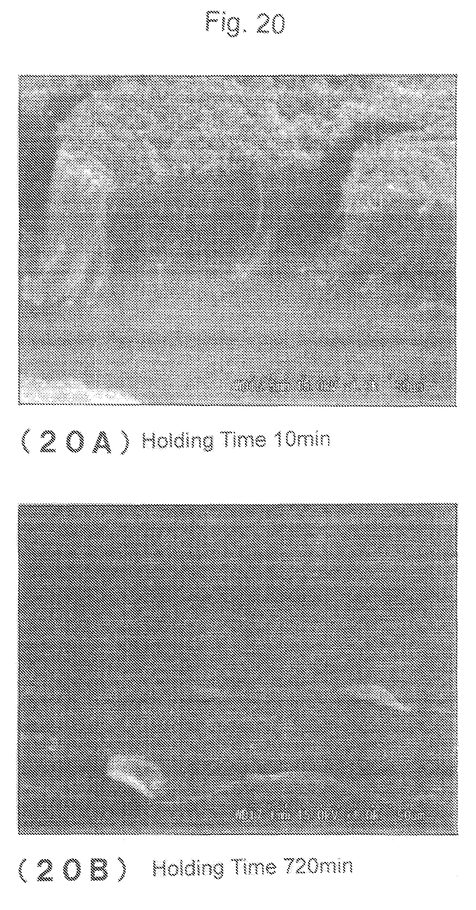

At last, when the generated carbon nanotube is held at a high temperature condition for a long time, it was examined how the form of carbon nanotube varies. At first, the raw-material gas concentration was adjusted in 23vol%, and carbon nanotube was grown by CVD at 700°C. The growing carbon nanotubes were compared between the case held at 700°C and 10min and the case held at 700°C and 720min. FIG. 20(20A) is the SEM image in the case held for 10min, and it is found that the carbon nanotube is held morphologically. On the other hand, (20B) is the SEM image in the case held for 720min, it is found that the carbon nanotube was not generated well because optimum atomization is not achieved by excess advance of oxidation. Therefore, as for the morphological formation of carbon nanotube, several tens min to 2 hours is suitable for the holding time at the high temperature, and it is preferable to lower the reaction chamber temperature after growth.

The present invention is not limited to the above-described embodiments, and it goes without saying that various modifications, design alterations and the like that may be made within limits that involve no departure from the technical concept of the present invention are included in the technical scope of the invention.

### [Industrial Applicability]

According to the present invention, by adjusting adequately the supply amount of oxidation gas such as oxygen and water being the minor constituent in carrier gas for the catalyst amount, it is possible to promote the moderate oxidation and atomization in the temperature up process, and furthermore, by supplying appropriately the oxidation gas in the growth process in the same manner, it is possible to realize the process for producing carbon nanostructure enabling to produce the high quality carbon nanostructure with high density and high efficiency and to realize the apparatus for producing the same.

## Claims

1. A catalyst disposed in a reaction chamber to which a raw-material gas is supplied and which grows a carbon nanostructure while flowing said raw-material gas in said reaction chamber, said catalyst comprising magnetite at least.

2. The catalyst according to claim 1, wherein said magnetite is used as a starting catalyst that grows said carbon nanostructure in said reaction chamber.

3. A process for producing carbon nanostructure in which a carrier gas and a raw-material gas are supplied in a reaction chamber and said carbon nanostructure grows by a catalyst disposed in said reaction chamber while flowing said raw-material gas in said reaction chamber, said process for producing carbon nanostructure comprising the steps of:
disposing beforehand said catalyst comprised of iron element in said reaction chamber, and
setting a magnetite conversion process in which said catalyst is converted to magnetite by supplying an oxidation gas in said reaction chamber with said carrier gas before supplying and flowing said raw-material gas in said reaction chamber.

4. The process for producing carbon nanostructure according to claim 3, said process further comprising a catalyst initialization process in which a reduction gas is supplied in said reaction chamber before said magnetite conversion process, so that an iron oxide component of said catalyst disposed in said reaction chamber is reduced.

5. The process for producing carbon nanostructure according to claim 3 or 4, said process comprising a carbon nanostructure growth process in which said oxidation gas is supplied in said reaction chamber with said raw-material gas and said carrier gas after said magnetite conversion process.

6. The process for producing carbon nanostructure according to claim 3, 4 or 5, wherein said oxidation gas is comprised of one or more substances selected from a group of water, oxygen, acetone, alcohol, DMF (dimethylformamide), CO2, CO, 03 and H2O2.

7. A raw-material gas for producing carbon nanostructure comprising said raw-material gas mixed with an oxidation gas beforehand.

8. The raw-material gas for producing carbon nanostructure according to claim 7, wherein said oxidation gas is water mixed with a range of 0.05ppm- 3%.

9. The raw-material gas for producing carbon nanostructure according to claim 7, wherein said oxidation gas is oxygen mixed with a range of 0.01ppb- 1%.

10. The raw-material gas for producing carbon nanostructure according to claim 7, wherein said oxidation gas is CO2 mixed with a range of 0.01ppm- 5%.

11. The raw-material gas for producing carbon nanostructure according to claim 7, wherein said oxidation gas is CO mixed with a range of 0.01ppm- 5%.

12. The raw-material gas for producing carbon nanostructure according to claim 7, wherein said oxidation gas is 03 mixed with a range of 0.01ppb- 1%.

13. The raw-material gas for producing carbon nanostructure according to claim 7, wherein said oxidation gas is H2O2 mixed with a range of 0.1ppb- 1%.

14. The raw-material gas for producing carbon nanostructure according to claim 7, wherein said oxidation gas is acetone mixed with a range of 1ppm- 10%.

15. The raw-material gas for producing carbon nanostructure according to claim 7, wherein said oxidation gas is alcohol mixed with a range of 1ppm- 10%.

16. The raw-material gas for producing carbon nanostructure according to claim 7, wherein said oxidation gas is DMF mixed with a range of 0.01 %- 0.5%.

17. The raw-material gas for producing carbon nanostructure according to any of claims 7 to 16, wherein a reduction gas is mixed with a range of less than or equal to 1 ppm.

18. A carrier gas for producing carbon nanostructure comprising said carrier gas mixed with an oxidation gas beforehand.

19. The carrier gas for producing carbon nanostructure according to claim 18, wherein said oxidation gas is water mixed with a range of 0.05ppm- 3%.

20. The carrier gas for producing carbon nanostructure according to claim 18, wherein said oxidation gas is oxygen mixed with a range of 0.01ppb- 1%.

21. A mixture gas for producing carbon nanostructure comprising said mixture gas in which a raw-material gas, a carrier gas and an oxidation gas for producing carbon nanostructure are mixed beforehand.

22. The mixture gas for producing carbon nanostructure according to claim 21, wherein said oxidation gas is water mixed with a range of 0.05ppm-3%.

23. The mixture gas for producing carbon nanostructure according to claim 21, wherein said oxidation gas is oxygen mixed with a range of 0.01 ppb-1 %.

24. The mixture gas for producing carbon nanostructure according to claim 21, 22 or 23, wherein said mixture gas further comprises a reduction gas with a range of less than or equal to 1 ppm.

25. A process for producing carbon nanostructure in which a raw-material gas is supplied in a reaction chamber and said carbon nanostructure grows by a catalyst disposed in said reaction chamber while flowing said raw-material gas in said reaction chamber, said process for producing carbon nanostructure comprising the steps of: disposing beforehand said catalyst comprised of iron element in said reaction chamber, and supplying said raw-material gas in said reaction chamber with an oxidation gas excluding water.

26. The process for producing carbon nanostructure according to claim 25, wherein said oxidation gas is comprised of one or more substances selected from a group of oxygen, acetone, alcohol, DMF (dimethylformamide), CO2, CO, 03 and H2O2.

27. A process for producing carbon nanostructure in which a raw-material gas is supplied in a reaction chamber and said carbon nanostructure grows by a catalyst disposed in said reaction chamber while flowing said raw-material gas in said reaction chamber, said process for producing carbon nanostructure comprising the steps of: disposing beforehand said catalyst comprised of iron element in said reaction chamber, supplying said raw-material gas in said reaction chamber with an oxidation gas, and controlling variably said raw-material gas concentration in a growth process of said carbon nanostructure by adjusting a supply concentration of said raw-material gas.

28. The process for producing carbon nanostructure according to claim 27, wherein a ratio of oxygen contained in said oxidation gas to said raw-material gas is variably controlled in said growth process of said carbon nanostructure.

29. The process for producing carbon nanostructure according to claim 27, wherein said ratio is variably controlled by adjustment of said supply concentration of said oxidation gas.

30. The process for producing carbon nanostructure according to claim 27, 28 or 29, wherein said oxidation gas is comprised of one or more substances selected from a group of water, oxygen, acetone, alcohol, DMF (dimethylformamide), CO2, CO, 03 and H2O2.

31. An apparatus for producing carbon nanostructure comprising a raw-material gas supply means and a catalyst comprised of iron element disposed beforehand in a reaction chamber so as that said raw-material gas is supplied in said reaction chamber by said raw-material gas supply means and said carbon nanostructure grows by said catalyst while flowing said raw-material gas in said reaction chamber, a carrier gas supply means supplying a carrier gas in said reaction chamber, and an oxidation gas supply means supplying an oxidation gas in said reaction chamber, wherein before supplying and flowing said raw-material gas in said reaction chamber, said oxidation gas is supplied in said reaction chamber with said carrier gas by said carrier gas supply means and said oxidation gas supply means, so that said catalyst is converted to magnetite.

32. The apparatus for producing carbon nanostructure according to claim 31, wherein said raw-material gas and said oxidation gas are flown for said magnetite in said reaction chamber.

33. The apparatus for producing carbon nanostructure according to claim 31 or 32, wherein said oxidation gas is comprised of one or more substances selected from a group of water, oxygen, acetone, alcohol, DMF (dimethylformamide), CO2, CO, 03 and H2O2.

34. The apparatus for producing carbon nanostructure according to claim 31, 32 or 33, said apparatus further comprising a reduction gas supply means supplying a reduction gas in said reaction chamber, wherein a reduction gas is supplied in said reaction chamber from said reduction gas supply means before said magnetite conversion of said catalyst, so that an iron oxide component of said catalyst disposed in said reaction chamber is reduced.

35. An apparatus for producing carbon nanostructure comprising a raw-material gas supply means supplying a raw-material gas in a reaction chamber, a catalyst comprised of iron element disposed beforehand in said reaction chamber and an oxidation gas supply means supplying an oxidation gas except water in said reaction chamber, so that said raw-material gas is supplied in said reaction chamber by said raw-material gas supply means, said oxidation gas is supplied in said reaction chamber by said oxidation gas supply means and said carbon nanostructure grows by said catalyst while flowing said raw-material gas and said oxidation gas in said reaction chamber.

36. An apparatus for producing carbon nanostructure comprising a raw-material gas supply means supplying a raw-material gas in a reaction chamber, a catalyst comprised of iron element, an oxidation gas supply means supplying an oxidation gas in said reaction chamber and an oxygen ratio control means controlling variably an ratio of oxygen contained in said oxidation gas supplied in said reaction chamber by said oxidation gas supply means to said raw-material gas supplied in said reaction chamber by said raw-material gas supply means, so that said raw-material gas is supplied in said reaction chamber by said raw-material gas supply means, said oxidation gas is supplied in said reaction chamber by said oxidation gas supply means and said carbon nanostructure grows by said catalyst while flowing said raw-material gas and said oxidation gas in said reaction chamber, and a concentration of said raw-material gas is variably controlled in said growth process of carbon nanostructure by adjusting a supply concentration of said raw-material gas.

37. The apparatus for producing carbon nanostructure according to claim 36, wherein said oxygen ratio in said oxidation gas to said raw-material gas is variably controlled in said growth process of carbon nanostructure.

38. The apparatus for producing carbon nanostructure according to claim 36, wherein said oxygen ratio control means controls variably said ratio by adjusting said supply concentration of said oxidation gas.

39. The apparatus for producing carbon nanostructure according to claim 29, 30 or 31, wherein said oxidation gas is comprised of one or more substances selected from a group of water, oxygen, acetone, alcohol, DMF (dimethylformamide), CO2, CO, 03 and H2O2.
